(19) Europäisches Patentamt
European Patent Office
Office européen des brevets

(11) EP 4 038 112 B1

(12) **EUROPEAN PATENT SPECIFICATION**

(45) Date of publication and mention of the grant of the patent:
**05.04.2023 Bulletin 2023/14**

(21) Application number: **21824577.7**

(22) Date of filing: **08.12.2021**

(51) International Patent Classification (IPC):
***C08F 6/00*** *(2006.01)* ***C08F 8/16*** *(2006.01)*
***C08F 220/14*** *(2006.01)*

(52) Cooperative Patent Classification (CPC):
(C-Sets available)
**C08F 220/14; C08F 6/003; C08F 6/005; C08F 8/16;**
C08L 35/02 (Cont.)

(86) International application number:
**PCT/EP2021/084756**

(87) International publication number:
**WO 2022/122806 (16.06.2022 Gazette 2022/24)**

# (54) OPTICAL GRADE MOULDING COMPOSITIONS HAVING INCREASED HEAT RESISTANCE

FORMENZUSAMMENSETZUNGEN FÜR OPTISCHE ANWENDUNGEN MIT ERHÖHTER WÄRMEBESTÄNDIGKEIT

COMPOSITIONS DE MOULAGE DE QUALITÉ OPTIQUE AYANT UNE RÉSISTANCE ACCRUE À LA CHALEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.12.2020 EP 20212726**

(43) Date of publication of application:
**10.08.2022 Bulletin 2022/32**

(73) Proprietor: **Röhm GmbH**
**64295 Darmstadt (DE)**

(72) Inventors:
- **CARLOFF, Rüdiger**
  **64291 Darmstadt (DE)**
- **ARNOLD, Werner**
  **Schaafheim (DE)**
- **DIETRICH, Gerald**
  **64665 Alsbach-Hähnlein (DE)**

(74) Representative: **Röhm Patent Association**
**IP Management**
**Deutsche-Telekom-Allee 9**
**64295 Darmstadt (DE)**

(56) References cited:
**EP-A1- 0 886 658** **EP-A1- 3 239 191**
**WO-A1-2017/097979** **US-B2- 7 888 456**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



(Cont. next page)

(52) Cooperative Patent Classification (CPC): (Cont.)

C-Sets
**C08F 6/003, C08L 33/12;**
**C08F 6/005, C08L 33/12;**
**C08F 8/16, C08F 220/14;**
C08F 220/14, C08F 220/06

## Description

### Technical field

The present invention relates to a process for the manufacturing of acrylic moulding compositions having increased heat resistance, excellent optical properties and improved adhesion to metals. Such moulding compositions are highly suitable for the manufacturing of optoelectronic devices comprising acrylic and metallic or ceramic components, for instance light emitting diodes (LEDs), LED lenses, light guides, optical sensors, solar cells and various medical devices having a light source.

### Prior art

Copolymers comprising repeating units derived from methyl methacrylate (hereinafter MMA), which, for the sake of simplicity are often called acrylic moulding compositions, are usually transparent materials having a high weathering resistance. Hence, acrylic moulding compositions are commonly used in applications where high transparency, low haze and high weathering resistance are required. There is also a growing demand for substantially colourless transparent polymers with particularly high heat resistance for optical applications including e.g. light sources for indoor and outdoor use comprising high-power light emitting diodes (LEDs). In order to increase the light yield of an LED, the built-in optical lens of the LED is positioned in a close proximity to the light emitting semiconductor element. Operating temperature of the LED surface, especially of so-called white high-power LEDs, often exceeds 100 °C or sometimes even 130 °C. Accordingly, it is important that materials for these applications are substantially colourless and have a high transparency and particularly low haze values as well as a high heat resistance.

Furthermore, optoelectronic devices such as LEDs, optical sensors or solar cells commonly comprise transparent acrylic components and metallic or ceramic structural elements which are airtightly sealed to each other. A durable, strong and airtight adhesion (sealing) between the acrylic and the metallic or ceramic components is therefore of utmost importance to ensure a long-term reliability and sustainability of the device, in particularly, if components of the device are sensitive to traces of humidity and/or oxygen.

It belongs to common general knowledge that presence of free carboxylic acid and phosphonic acid functionalities in acrylic polymers is advantageous in terms of adhesion to metallic or ceramic substrates because these functionalities chemically react with commonly used metals or ceramic surfaces. For this reason, copolymers comprising repeating units derived from (meth)acrylic acid, for instance copolymers of MMA and methacrylic acid (hereinafter MAA) are generally good candidates for use in optoelectronic devices. On the other hand, it is important that the cumulative content of MAA units and glutaric anhydride units in the copolymer does not exceed 20 wt.-%, preferably does not exceed 10 wt.-%, based on the weight of the copolymer to ensure that the copolymer has a low water absorption. A high content of glutaric anhydride units in the copolymer in relation to the MAA units often have an increased optical haze.

Furthermore, copolymers comprising MAA units are commonly used as compatibilizers, adhesion promoters or reactive components. In these applications, a high content of MAA units is essential for achieving a sufficient adhesion.

US 7,888,456 B2 describes a process for producing a thermoplastic copolymer, in which a copolymer containing an unsaturated carboxylic acid alkyl ester units such as MMA and an unsaturated carboxylic acid units such as MAA is produced and subsequently heat-treated to perform intramolecular cyclization reaction for producing a thermoplastic copolymer containing glutaric anhydride units. The final product of US 7,888,456 B2 is reported to have glass transition temperature of not lower than 130 °C, a high-level transparency and good heat resistance. However, as a consequence of predominant formation of glutaric anhydride units, it has only a low content of repeating units derived from MAA and therefore only a moderate adhesion to metallic or ceramic surfaces.

EP 3 239 191 A1 describes a process for producing a (meth)acrylic resin composition comprising continuously feeding a monomer mixture of methylmethacrylate, optional alkyl acrylates and optional other co-monomers into a tank reactor, conducting bulk polymerization at a conversation ratio of 40 to 70 %, and continuously feeding the liquid to a vented extruder to separate volatile components.

WO 97/33925 A1 describes a multi-stage process for producing a heat resistance polymethylmethacrylate moulding composition, wherein the process encompasses the radical polymerization of methylmethacrylate and optional co-monomers, e.g. alkyl acrylates, in at least two reactors. The first reactor is operated at a temperature of less than 120 °C and the second reactor is operated at a temperature in the range of 130 to 200 °C. Typically, the unreacted monomers are separated in a following vacuum degassing step and are at least partially recycled in the polymerization process.

WO 2017 / 097979 A1 teaches a process for preparation of a copolymer comprising monomers of MMA and MAA. Examples of WO 2017 / 097979 A1 briefly mention that the crude polymeric syrup after polymerisation step can be devolatilized at a temperature of 200 °C to 230 °C (temperature of the heating jacket of the extruder) in a degassing extruder to give the final copolymer. No information about the copolymer melt temperature is disclosed. The obtained

copolymer is reported to be suitable for light guides, lenses, automotive trims, parts of automotive rear and front lights etc. No details regarding the degassing step are provided.

Initial attempts of the inventors to reproduce the teaching of WO 2017 / 097979 A1 gave a copolymer with a high content of glutaric anhydride units and a low content of free carboxylic acid groups. Hence, this copolymer had only a moderate adhesion to metallic or ceramic surfaces and was unsuitable for the desired purpose.

It is well-known that an efficient degassing of a copolymer mixture obtained in a polymerisation step normally employs high operation temperatures to remove volatile components, in particular, unreacted monomers such as MMA and MAA. This step is necessary because traces of such components in the final copolymer tend to decrease heat resistance and, in case of MAA, cause corrosion of extrusion or injection moulding equipment. Furthermore, they can lead to optical defects during injection moulding process due to foam formation.

In MMA-MAA copolymers having a 10 wt.-% and less MAA units in the copolymer chain, formation of glutaric anhydride units mainly results from a reaction of adjacent MAA and MMA units, accompanied by formation of methanol. In MMA-MAA copolymers having a higher content of MAA units in the copolymer chain, formation of glutaric anhydride units from a reaction of two adjacent MAA units, accompanied by formation of water, also becomes an important side-reaction at elevated temperatures. Traces of methanol and water, even if present in small amounts, tend to reduce heat resistance of the final copolymer and may lead to surface defects during injection moulding because of their partial vaporisation.

The inventors noted that between the last degassing zone of a degassing device such as a degassing extruder, in relation to the direction of conveying of the copolymer melt, and the melt outlet die there are normally hold-ups in which the copolymer melt still has a high temperature. As a consequence, glutaric anhydride units, methanol and water can be formed, which then remain in the final polymer. Hold-ups are e.g. zones in the degassing device after the last degassing zone in which a pressure is built up to press the copolymer melt through the subsequent conduits, melt filters or melt sieves and the melt outlet die.

In order to minimize undesired formation of glutaric anhydride units, low temperatures and/or low residence times of the copolymer melt in the hold-ups after the last extruder degassing zone would therefore be advantageous. However, under these conditions the removal of volatile components such as unreacted methacrylic acid residuals would be more difficult. Furthermore, an active cooling of the copolymer melt directly after the last degassing zone, in relation to the direction of conveying of the copolymer melt, would lead to an increase of its melt viscosity and render handling and filtration of the copolymer melt difficult. Due to high viscosity of the copolymer melt, low radial mixing, a limited heat transfer and a low heat conductivity, possibilities to change the melt temperature by means of heating or cooling elements after the degassing device are limited.

**Object of the present invention**

Upon consideration of the above described shortcomings, it was an object of the present invention to provide a process for the preparation of an acrylic copolymer having excellent optical properties, in particular a low haze and substantially no yellow tinge, a high heat resistance and a high content of free carboxylic acid groups and a low contend of glutaric anhydride units. These properties would allow use of the copolymer in optoelectronic devices such as LEDs, optical lenses, light guides, optical sensors and solar cells which comprise a transparent acrylic component and a metallic or ceramic structural element and have a high operating temperature on their surfaces. Due to a high content of free carboxylic acid functionalities the copolymer would have an excellent adhesion to metallic and ceramic surfaces and allow a durable, strong and airtight adhesion between acrylic and metallic or ceramic components of such devices. Furthermore, it was desired that the cumulative content of MAA units and glutaric anhydride units in the copolymer does not exceed 20 wt.-%, preferably does not exceed 10 wt.-%, based on the weight of the copolymer, to ensure that the copolymer has a low water absorption.

**Summary of the invention**

In order to overcome the drawbacks of WO 2017/097979 A1 the inventors performed an extensive study and surprisingly found that the content of free carboxylic acid groups in a copolymer obtainable by polymerisation of MMA and MAA can be dramatically increased by carefully adjusting process conditions after the degassing step. In particular, it was found that when a copolymer mixture obtained in a polymerisation step is devolatilized in a degassing unit comprising

at least one copolymer mixture feed port,
at least one degassing device, the degassing device comprising

at least one degassing zone,
at least one gas outlet

at least one copolymer melt outlet,

and at least one melt outlet die,

it is crucial that the temperature of the copolymer melt *Tv,* °C (Tv given in °C) in the last degassing zone, in relation to the direction of conveying of the copolymer melt, the temperature of the copolymer melt *To,* °C (*To* given in °C) entering the melt outlet die and the total residence time *t,* s (t given in s) of the copolymer melt between the last degassing zone, and the melt outlet die of the degassing unit are adjusted in such a way that the term

$$4.981 \cdot 10^{-8} \cdot t \cdot exp\,(0.0517 \cdot (1.5 \cdot Tv + 0.5 \cdot To) / 2)$$

is lower than 8, preferably lower than 6, even more preferably lower than 4, particularly preferably lower than 2. If the above term is higher than 8, a substantial formation of glutaric anhydride units takes place so than the resulting copolymer has a diminished content of methacrylic acid units in relation to the content of monomeric methacrylic acid in the monomer mixture of the polymerization step (a).

Under these process conditions undesired intramolecular cyclization reaction forming glutaric anhydride units from MAA units and adjacent MMA units in the copolymer can be efficiently supressed so that the final copolymer has a particularly high content of free carboxylic acids groups. Additionally, the copolymer has a high heat resistance and excellent optical properties, in particular a low haze and substantially no yellow tinge. The expressions *"high heat resistance"* and *"low heat resistance"* as used herein indicate that the copolymer has a high / low Vicat softening temperature (ISO 306-B50).

Figure 1 schematically shows an example of a degassing unit employed in the degassing step (c):

1. degassing extruder
2. copolymer mixture feed
3. copolymer mixture feed port
4. last degassing zone (vacuum zone)
5. last gas outlet
6. copolymer melt outlet
7. melt outlet die
8. motor
9. copolymer melt
10. melt filter (optional)
11. further gas outlets (optional)
12. melt conduit
13. zone 1 (cf. Examples 1-3)
14. metering zone (cf. Examples 1-3)

## Detailed description of the invention

The process of the present invention comprises at least a polymerisation step (a), followed by an optional heating step (b) and subsequently followed by a degassing step (c).

In the polymerisation step (a), a monomer mixture comprising from 80.0 to 99.9 wt.-%, preferably from 85.0 to 98.0 wt.-%, of MMA; and from 0.1 to 20.0 wt.-%, preferably from 2.0 to 8.0 wt.-%, of a compound represented by formula (I)

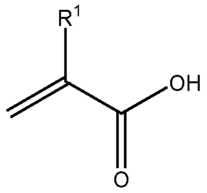

(I)

the substituent $R^1$ being a hydrogen atom or a hydrocarbon group having from 1 to 6 carbon atoms, preferably a methyl group;

optionally, from 0.0 to 19.9 wt.-%, preferably from 0.0 to 7.0 wt.-% of a monomer selected from methyl acrylate,

ethyl acrylate or styrene;
a polymerisation initiator;
and, optionally, a chain transfer agent
undergoes radical copolymerisation in a polymerisation reactor to form a copolymer mixture.

The term *"copolymer mixture"* as used herein refers to a mixture comprising the copolymer and volatile components. The *"volatile components"* include MMA, the compound represented by formula (I), optionally, and a monomer selected from methyl acrylate, ethyl acrylate or styrene. Furthermore, the *"volatile components"* may optionally comprise a solvent, methanol and water.

The form of the copolymer mixture obtained in the step (a) is not particularly limited and depends on the reaction conditions and polymerisation type. The polymerisation in the step (a) may be a bulk polymerisation, a solution polymerisation, a dispersion polymerisation or a suspension polymerisation. Accordingly, the copolymer mixture may be a copolymer solution (sometimes also called copolymer syrup), a copolymer dispersion or a copolymer suspension.

In the optional heating step (b) the copolymer mixture obtained in the polymerisation step (a) is heated in a heating unit to a temperature from 100 °C to 300 °C.

Subsequently, in the degassing step (c) the volatile components are removed from the copolymer mixture in a degassing unit, the degassing unit comprising

at least one copolymer mixture feed port,
at least one degassing device, the degassing device comprising

at least one degassing zone,
at least one gas outlet,
at least one copolymer melt outlet,
and at least one melt outlet die, wherein

the temperature of the copolymer melt *Tv,* °C in the last degassing zone, in relation to the direction of conveying of the copolymer melt,
the temperature of the copolymer melt *To,* °C entering the melt outlet die and the total residence time *t*, s of the copolymer melt between the last degassing zone, and the melt outlet die of the degassing unit are adjusted in such a way that the term

$$4.981 \cdot 10^{-8} \cdot t \cdot exp\,(0.0517 \cdot (1.5 \cdot Tv + 0.5 \cdot To) / 2)$$

is lower than 8, preferably lower than 6, even more preferably lower than 4, particularly preferably lower than 2.

The term *"copolymer melt outlet"* as used herein refers to the exit of the degassing device. In contrast, the term *"melt outlet die"* is the exit of the entire degassing unit. After exiting the melt outlet die the copolymer melt is typically cooled to a temperature of not more than 150 °C, preferably less than 100 °C and pelletized.

The temperature of the copolymer melt *Tv,* °C in the last degassing zone is measured in the middle part of the degassing zone. For practical reasons, the sensor measuring *Tv* is located not more than 10 mm, preferably not more than 5 mm above the polymer melt in the last degassing zone. The temperature of the copolymer melt *To,* °C is measured in the middle of the entrance of the melt outlet die.

The steps (a) - (c) will be described in the following.

**Polymerisation step (a)**

Radical copolymerisation of monomer mixtures comprising MMA and MAA is *per se* well known in the prior art. The polymerisation step (a) can employ a method in which polymerisation is performed in a state containing said monomer mixture, a polymerisation initiator and, optionally, a chain transfer agent and not substantially containing a solvent (bulk polymerisation method). Alternatively, a solvent capable of dissolving the copolymer may be present or added during the polymerisation (solution polymerisation method). The polymerisation can also be performed in a dispersed medium, where the monomers are dispersed in water or an aqueous mixture.

In one preferred embodiment, the monomer mixture in the step (a) comprises

from 80.0 to 99.5 wt.-%, preferably from 85.0 to 98.0 wt.-% of MMA;
from 0.5 to 20.0 wt.-%, preferably from 2.0 to 8.0 wt.-%, of the compound represented by formula (I)

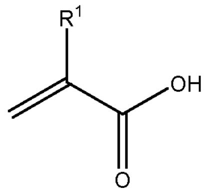

(I)

the substituent $R^1$ being a hydrogen atom or a hydrocarbon group having from 1 to 6 carbon atoms; and, optionally from 0.0 to 19.5 wt.-%, preferably from 0.0 to 7.0 wt.-% of a monomer selected from methyl acrylate, ethyl acrylate or styrene.

In case that one or more of optional monomers are present in the copolymer, typically the amount of the MMA monomer can be adapted accordingly.

Hence, the resulting copolymer typically comprises

from 80.0 to 99.5 wt.-%, preferably from 85.0 to 98.0 wt.-% of repeating units derived from MMA;
from 0.5 to 20.0 wt.-%, preferably from 2.0 to 8.0 wt.-% of repeating units derived from the compound represented by formula (I)

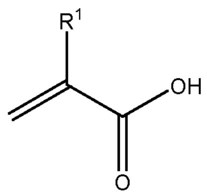

(I)

the substituent $R^1$ being a hydrogen atom or a hydrocarbon group having from 1 to 6 carbon atoms, preferably a methyl group; and, optionally
from 0.0 to 19.5 wt.-%, preferably from 0.0 to 7.0 wt.-% of repeating units derived from methyl acrylate, ethyl acrylate or styrene.

In one embodiment the step (a) is carried out as a bulk polymerisation *i.e.* without an added solvent. In a further embodiment the step (a) is carried out with a solvent i.e. as a solution polymerisation. If a solution polymerisation method is employed, the solvent used in the step (a) is not especially limited as long as it is capable of dissolving the copolymer at the polymerisation temperature as described before and does not interfere with the polymerisation process except some minor chain transfer. One or more solvents selected from aromatic hydrocarbons, ketones, ethers, esters, amides and alcohols can be used. Examples of a solvent that can be used include but are not limited to publicly known organic solvents such as acetone, methyl ethyl ketone, methyl-n-butyl ketone, methyl isobutyl ketone, ethyl isobutyl ketone, tetrahydrofuran, dioxane, *N,N*-dimethylformamide, *N,N*-diethylformamide, *N,N*-dimethylacetamide, *N,N*-diethylacetamide, *N*-methyl pyrrolidone, propylene glycol, 2-methoxy-2-propanol and tetraglyme. In particular, solvents selected from toluene, butyl acetate, ethyl acetate, xylene, dimethylfurane or mixtures thereof are preferred.

If the step (a) is performed in a solvent, the solvent content in the reaction mixture typically ranges between 1.0 wt.-% and 60 wt.-%, more preferably between 5.0 wt.-% and 45 wt.-%, based on the total weight of the reaction mixture.

The monomer mixture in the polymerisation reactor may optionally comprise further additives, selected from UV absorbers, UV stabilizers, lubricants, mould releasing agents, thermal stabilizing agents, additives to increase scratch resistance, antistatic additives and colourants such as pigments or dyes. These additives will be described in detail below. The additives may be added to the polymerisation reactor separately or as a mixture with MMA, with the compound represented by formula (I) or, if present, with methyl acrylate, ethyl acrylate or styrene.

It is further preferred that the dissolved molecular air oxygen ($O_2$) concentration of the reaction mixture in the polymerisation step (a) is controlled to be 70 ppm or less, so that the resulting copolymer has a particularly low haze and yellowness index. For further inhibiting the coloration, dissolved oxygen concentration is preferably less than 10 ppm. The dissolved oxygen concentration can be measured using a dissolved oxygen meter (for example, DO Meter B-505 as a galvanic oxygen sensor produced by Iijima Denshi Kogyo K.K.).

Choice of a polymerisation reactor for use in the polymerisation step (a) is not particularly limited. The polymerisation reactor may comprise or be a discontinuously or continuously operated stirred tank reactor, a continuously operated tubular reactor, a discontinuously or continuously operated loop reactor or a combination of any those, and wherein if several reactors are employed, they may be operated in parallel or can be sequentially connected.

The monomers can be added to the reactor as a mixture or as separate feeds. The polymerisation step (a) can be carried out in a discontinuous reactor (batch) or a semi-batch reactor type, in which initiator, if present, solvent, monomer or a combination of any of those is optionally fed during the polymerisation step (a). Alternatively, the polymerisation step (a) can be performed in a continuous polymerisation process like in stirred tank reactors (CSTR), in a tubular reactor or a combination thereof, in kneaders or in disc ring reactors.

In some embodiments, the copolymer reaction mixture from outlet of the first CSTR can be successively continuously supplied to a second and/or third reaction device, as an example a further CSTR or to a tubular reactor in order to increase the conversion. The term *"conversion"* as used in the present application refers to an average weight ratio of the copolymer formed in the polymerisation step (a) to the total monomer feed.

The conversion rate can be readily adjusted by a skilled person by adapting the average residence time of the reaction mixture in the reactor, polymerisation temperature, reactivity of the initiator used and the amount of the initiator and the monomer concentration in the reactor feed. For instance, if a CSTR is used, the average residence time is preferably selected in range from 10 minutes to 7 hours, more preferably from 20 minutes to 6 hours, for instance from 30 minutes to 4 hours. Average residence times above 7 hours are generally disadvantageous in terms of productivity and cost-efficiency.

The polymerisation temperature during the polymerisation step (a) in a CSTR is advantageously kept in a range from 60 °C to 200 °C, more preferably from 70 °C to 180 °C, particularly preferred from 80 °C to 170 °C to avoid an excessive viscosity increase of the reaction mixture in the reactor. It is preferred that the monomer conversion at the outlet of the CSTR is kept in a range from 30 to 70 wt.-%, based on the total weight of the monomers added to the reaction mixture. If the polymer mixture outlet of the CSTR described above is fed to a second CSTR, the conversion of the second CSTR is preferably kept in the range from 30 wt.-% to 80 wt.-%.

In a further embodiment, the polymerisation step (a) may be performed in a tubular like reactor. Both bulk polymerisation and solution polymerisation can be performed continuously in a tubular reactor with or without mixing elements. It is preferred that the monomer conversion at the outlet of the tubular reactor is kept in a range from 50 to 98 wt.-%, based on the total weight of the monomers added to the reaction mixture. At a conversion below 50 wt.-%, the process becomes disadvantageous from economical point of view. On the other hand, the conversion should not exceed 98 wt.-%, since it unnecessarily increases the average residence time in the tubular reactor. An even more preferred range is from 55 to 96 wt.-%, and a more preferred range is from 60 to 94 wt.-%, in particular, if the tubular reactor is operated in combination with another reactor and is the final polymerisation reactor employed in the polymerisation step (a).

The average residence time of the reaction mixture in the tubular reactor is not particularly limited. For practical reasons it is commonly kept in a range from 20 sec to 8 hours. If the average residence time is shorter than 20 sec, the conversion remains low. On the other hand, the average residence time in a tubular reactor should not exceed 9 hours for productivity reasons.

As a method for adding the radical polymerisation initiator in the tubular reactor, it is preferred to add the radical polymerisation initiator together with the feed of the monomers and/or of the solvent. Equally preferred is a method of preliminarily mixing the radical polymerisation initiator in a static mixer disposed in series to the inlet of the tubular reactor and passing the mixture through said tubular reactor. Furthermore, it is possible and of advantage to add at least some of the monomers and/or the solvent and/or the same or a different type of initiator downstream along the tubular reactor to ensure an even better control of the conversion during the polymerisation step (a) and of the composition of the formed copolymer.

Furthermore, for an improved adjustment of the temperature rise of the reaction mixture, it is preferred to add the radical polymerisation initiator at a location immediately before the reaction mixture inlet of the tubular reactor and optionally at one or more further locations inside the reactor. This allows the polymerisation to proceed more effectively.

The copolymer content in the reaction mixture in a tubular reactor can normally be kept in a range from 50 to 98 wt.-%, more preferably 60 to 96 wt.-%, even more preferably 60 to 94 wt.-% to ensure an efficient polymerisation.

It is advantageous to use a radical polymerisation initiator with a half-life time of decay of from 0.05 to 90 minutes in a CSTR at the polymerisation temperature. A more preferred range is from 0.05 to 60 minutes, and the most preferred range is from 0.1 to 20 minutes. If the half-life time of decay is shorter than 0.05 minute, since the radical polymerisation initiator is decomposed before it is uniformly dispersed in the polymerisation reactor, the efficiency (initiation efficiency) of the radical polymerisation initiator declines. If the amount of the radical polymerisation initiator is increased, heat resistance of the resulting copolymer declines. On the other hand, if the half-life time of decay is longer than 90 minutes in the CSTR, it is difficult to stably operate the polymerisation. Additionally, the initiator concentration in the CSTR is accumulated when the half-life time of decay is high, which sometimes may lead to unsafe situations, as the polymerisation and the generated polymerisation heat can be hardly controlled. That can lead to a run-away of the polymerisation

temperature in the CSTR.

Furthermore, when the polymerisation is further performed in the tubular reactor, it is preferred to add one or more radical polymerisation initiators with a half-life of decay of 0.1 to 8 hours at the reaction temperature of the tubular reactor. A more preferred range is 1 to 7 hours. It is not preferred that the half-life of decay of the radical polymerisation initiators is above 8 hours because it becomes difficult to control the polymerization. On the other hand, it is not preferred that the half-life of decay is too short, because the radical polymerisation initiator will be decomposed quickly, not allowing the conversion to be raised sufficiently. As a consequence, a copolymer with a poor heat resistance would be produced. Therefore, it is preferred to use a radical polymerisation initiator with a half-life-time of decay of 0.1 hours or longer.

One radical polymerisation initiator can be used or two or more can also be used as a mixture. In the case where two or more radical polymerisation initiators are used in the tubular reactor, it is preferred to use radical polymerisation initiators different in 10-hour half-life of decay temperature by 5 °C or more. This allows the polymerisation step (a) to proceed more efficiently.

The radical polymerisation initiator can be selected, for example, from organic peroxides such as *tert*.-butyl peroxy-3,5,5-trimethylhexanoate, *tert*.-butyl peroxy laurate, *tert*.-butyl peroxy isopropyl monocarbonate, *tert*.-hexyl peroxy isopropyl monocarbonate, *tert*.-butyl peroxy acetate, 1,1-bis(*tert*.-butyl peroxy)-3,3,5-trimethylcyclohexane, 1,1-bis(*tert*.-butyl peroxy)cyclohexane, *tert*.-butyl peroxy 2-ethylhexanoate, *tert*.-butyl peroxy isobutyrate, *tert*.-hexyl peroxy 2-ethylhexanoate, di-*tert*.-butyl peroxide, 2,5-dimethyl-2,5-bis(*tert*.-butyl peroxy) hexane, lauroyl peroxide, benzoyl peroxide, *tert*.-butyl peroxy neodecanoate, *tert*.-butyl peroxy pivalate, *tert*.-butyl peroxy-2-ethylhexanoate, *tert*.-butyl peroxy benzoate and dicumyl peroxide, azo compounds such as 2-(carbamoylazo)-isobutyronitrile, 1,1'-azobis(1-cyclohexanecarbonitrile), 2,2'-azobisisobutyronitrile, 2,2'-azobis(2-methylbutyronitrile), dimethyl 2,2'-azobisisobutyrate, 2,2'-azobis(2,4,4-trimethylpentane), 2,2'-azobis(2-methylpropane), 2,2'-azobis-4-methoxy-2,4-dimethylvaleronitrile and 2,2'-azobis-2,4-dimethylvaleronitrile, and the like.

The amount of the radical polymerisation initiator used in the polymerisation step (a) is adjusted depending on the polymerisation temperature, polymerisation time (average retention time) and intended conversion rate. It is preferred that the amount is from 0.001 to 2.0 wt.-%, based on the total weight of the reaction mixture in the polymerisation step (a). A more preferred range is from 0.01 to 2.0 wt.-%, and even more preferred range is from 0.01 to 1.0 wt.-%.

For the purpose of controlling the molecular weight of the copolymer, it is often advantageous to add from 0.001 to 2.0 wt.-%, more preferably from 0.005 to 2.0 wt.-%, and even more preferably from 0.01 to 1.0 wt.-%, based on the total weight of the reaction mixture in the polymerisation step (a), of a chain transfer agent. Suitable chain transfer agents *per se* are well-known in the prior art and may be selected from *e.g.* an alkyl mercaptan, carbon tetrachloride, carbon tetrabromide, dimethylacetamide etc. Examples of an alkyl mercaptan used in the polymerisation step (a) include *inter alia n*-octyl mercaptan, *tert*.-dodecyl mercaptan, *n*-dodecyl mercaptan, *n*-tetradecyl mercaptan, *n*-octadecyl mercaptan, etc. Among them, *n*-octyl mercaptan, *n*-dodecyl mercaptan and methyl mercaptopropionate can be advantageously used.

In one preferred embodiment, the copolymer mixture obtained in a CSTR is successively continuously supplied into a tubular reactor to perform further polymerisation. This reduces the amounts of volatile components which need to be removed in a downstream step, thereby rendering the entire process even more cost-efficient.

The method for supplying the copolymer mixture obtained in the CSTR into a second reactor, e.g. a second CSTR, a tubular reactor or a tubular loop reactor is not especially limited. For example, the operation of drawing the reaction mixture from the first CSTR to the second reactor can be performed using a pump. As the liquid feed pump, a publicly known gear pump can be suitably used. If the reaction mixture is drawn by a pump, the reaction mixture can be stably fed into the second reactor, and the pressure in the second reactor, optionally having statically mixing structure portions installed in succession, can be raised to higher than the vapor pressure of the reaction mixture. As a further possibility, the reaction mixture can be transferred from the CSTR into a second reactor by means of pressure difference between the reactors.

The total conversion in the polymerisation step (a) is normally at least 40 wt.-%, more preferably at least 45 wt.-%. The conversion lower than 40 wt.-% is disadvantageous for economic reasons. On the other hand, it is not preferred either that the final conversion is higher than 98 wt.-% since the polymerisation time becomes too long for economic reasons. A preferred range is 40 to 96 wt.-%, and a more preferred range is 45 to 94 wt.-%.

## Heating step (b)

According to the present invention, the copolymer mixture obtained in the polymerisation step (a) can be supplied to an optional step of heating the copolymer mixture to a temperature from 100 °C to 300 °C (heating step (b)). This can be advantageously done using a heat exchanger. The design of the heat exchanger is not particularly limited. The heat exchanger can be *e.g.* a tubular bundle of parallel arranged tubes. Alternatively, a heat exchanger can be a plate heat exchanger.

The heat exchanger may optionally contain static mixing elements or a stirrer. Examples of static mixing elements include SMX type and SMR type Sulzer tubular mixers, Kenics static mixers, Toray tubular mixer, etc. Alternatively, the

heat exchanger may not contain any mixing elements.

The heating of the copolymer mixture can optionally be performed by a jacket filled with hot oil, water, steam and/or alternatively using electrical heating elements.

## Degassing step (c)

Following the polymerisation step (a) or following the optional heating step (b), the copolymer mixture is subsequently supplied into a degassing unit for the degassing step (c), in which the volatile components, such as unreacted monomers, methanol and, if present, the solvent are removed. The step (c) is carried out in a degassing unit comprising at least one copolymer mixture feed port, at least one degassing device and at least one melt outlet die. The degassing device comprises at least one degassing zone, at least one gas outlet and at least one copolymer melt outlet. Furthermore, as will be readily appreciated by a skilled person, the degassing unit may comprise further elements such as for instance conduits, melt filters etc. located between the degassing device and the melt outlet die. For instance, in order to minimize contamination of the copolymer with solid foreign matter, the degassing unit employed in the degassing step (c) may optionally comprise at least one melt filter, located between the last degassing zone of the degassing device, in relation to the direction of conveying of the copolymer melt, and the melt outlet die.

Melt filters are usually devices installed in the copolymer melt flow in a melt conduit and are equipped with mesh sieves. The mesh sieves may be made of stainless steel and typically include various connected sieve layers. The melt filters are designed in such a way that they can remove small solid contaminations from the copolymer melt. For a continuous operation it is further advantageous to use a self-cleaning melt filter which is also called double piston screen changer *e.g.* a melt filter of the RSFGENIUS series, commercially available from Gneuss or a melt filter of the KSWE series, commercially available from Nordson-BKG. A melt filter with installed melt sieves typically has a hold up volume that is filled with the flowing copolymer melt. The melt filter hold-up contributes to the residence time *t* of the copolymer melt after the last degassing zone.

The temperature of the copolymer mixture in the degassing step is typically lower than 300 °C, more preferably from 150 °C to 300 °C, even more preferably from 170 °C to 290 °C. The preferred pressure in the last devolatilization zone of the degassing step is an absolute pressure, typically below 500 mbar, more preferably below 300 mbar. The lower limit of the absolute pressure in the degassing step is not limited, but for technical reasons it is normally at least 1 mbar or higher. For instance, the absolute pressure in the last degassing zone of the degassing device, in relation to the direction of conveying of the copolymer melt, can be advantageously adjusted in the range of 1 mbar to 300 mbar, preferably 10 mbar to 200 mbar, or between 1 mbar and 300 mbar, preferably between 10 mbar and 200 mbar.

If the pressure in the degassing step is higher than 500 mbar, even if devolatilization is performed within said temperature range, typically the unreacted monomers or the mixture consisting of the unreacted monomers and the polymerisation solvent, if present, cannot be separated or removed efficiently. This is disadvantageous in terms of heat resistance and mechanical and optical properties of the resulting copolymer.

The degassing device in the degassing step (c) is not particularly limited and may be selected from a degassing extruder, a degassing kneader and one or several static flash chambers. In particular, a single screw degassing extruder or a twin-screw degassing extruder, a static flash chamber, a degassing kneader or a combination thereof can be advantageously used. One embodiment is an apparatus that has a cylindrical container and a stirrer having multiple stirring elements attached to a rotating shaft, and has at least one or more degassing holes at the top of the cylindrical portion, a copolymer mixture feed port for supplying the copolymer mixture at one end of the cylindrical portion and a copolymer melt outlet for taking out the copolymer melt after completion of devolatilization at the other end may be used. The number of rotating shafts is not limited but is usually 1 to 5, preferably 1 or 2, and an apparatus having two rotating shafts is more preferred. Particularly, a vented continuous single or twin screw extruder (kneading apparatus and batch type melt kneading apparatus) are preferred, and a single screw extruder, double screw extruder, double screw/single screw combined continuous kneading extruder and triple screw extruder respectively with "Unimelt" type screw(s), and continuous or batch type kneading machine can be mentioned here. Above all, especially a vented single or double screw extruder or a continuous double screw reactor with multiple convex lens type and/or elliptical plate paddles can be preferably used.

Further, the degassing step (c) in the production process of this invention can employ a method of using two or more devolatilization apparatuses disposed in series, to perform the devolatilization, and this is advantageous since the remaining volatile component in the copolymer melt obtained after devolatilization can be decreased even further.

After exiting the degassing device of the degassing unit the material normally passes further elements such as melt conduits, melt filters etc. and finally exits the degassing unit through the melt outlet die.

According to the present invention,

the temperature of the copolymer melt *Tv,* °C (Tv given in °C) in the last degassing zone, in relation to the direction of conveying of the copolymer melt,

the temperature of the copolymer melt *To,* °C (To given in °C) entering the melt outlet die and
the total residence time *t*, s (t given in s) of the copolymer melt between the last degassing zone, and the melt outlet die of the degassing unit are adjusted in such a way that the term

$$4.981 \cdot 10^{-8} \cdot t \cdot exp\,(0.0517 \cdot (1.5 \cdot Tv + 0.5 \cdot To) / 2)$$

is lower than 8, preferably lower than 6, even more preferably lower than 4, particularly preferably lower than 2. The temperature of the copolymer melt *Tv,* °C in the last degassing zone is measured in the middle part of the degassing zone. The temperature of the copolymer melt *To,* °C is measured in in the middle of the entrance of the melt outlet die.

Importantly, by keeping the above term lower than 8, preferably lower than 6, even more preferably lower than 4, particularly preferably lower than 2, undesired formation of glutaric anhydride units in the polymeric chain can be efficiently suppressed so that the copolymer exiting the melt outlet die has a high content of free carboxylic acid functionalities. After exiting the melt outlet die the copolymer melt normally undergoes a rapid cooling and pelletizing. This also ensures a high content of free carboxylic acid functionalities.

Notwithstanding the above, the inventors found that undesired formation of glutaric anhydride units can be suppressed even further, if the temperature of the copolymer melt *Tv,* °C in the last degassing zone and the temperature of the copolymer melt *To,* °C entering the melt outlet die are adjusted in such a way that the term (1.5 . *Tv* + 0.5 · *To)* / 2), is kept in the range of 230 to 290 °C or between 230 °C and 290 °C. Often, at temperatures above 290 °C formation of glutaric anhydride units leads to a significant consumption of carboxylic acid functionalities in the copolymer, accompanied by formation of methanol and water. As a consequence, adhesive properties of the copolymer on metallic or ceramic surfaces become compromised to some extent. On the other hand, at melt temperatures below 230 °C the rate of copolymer devolatilization was often found to be insufficient and the copolymer melt exiting the melt outlet die contains increased amounts of volatile organic compounds. This has a negative impact on heat resistance of the final product.

The residence time *t* of the copolymer melt between the last degassing zone and the melt outlet die of the degassing unit can be adjusted by adapting the length of the melt conduits and number of optional elements such as melt filters, meld sieves etc. Shorter residence time *t* generally leads to suppression of undesired formation of glutaric anhydride units and is therefore advantageous. For practical reasons, the total residence time *t,* s of the copolymer melt between the last degassing zone, in relation to the direction of conveying of the copolymer melt, and the melt outlet die is typically adapted to be in the range of 10 s to 200 s or range between 10 s and 200 s. The melt outlet die usually has a relatively small hold up volume filled with the polymer melt. The melt outlet die may optionally have a jacket which can be heated or cooled.

To minimize formation of glutaric anhydride units even further, it is preferred that after exiting the melt outlet die the final copolymer melt undergoes solidification and pelletizing within not more than 10 s, preferably not more than 5 s. The term *"solidification"* as used herein refers to cooling to a temperature of not more than 150 °C, preferably less than 100 °C.

**Moulding composition**

In its further aspect, the present invention relates to a moulding composition obtainable by (or obtained by) the process described above. The moulding composition comprise at least 80 wt.-%, preferably at least 90 wt.-% of a copolymer, said copolymer comprising

from 80.0 to 99.9 wt.-%, preferably from 85.0 to 98.0 wt.-% of repeating units derived from MMA; and
from 0.1 to 20.0 wt.-%, preferably from 2.0 to 15.0 wt.-%, also preferably from 2.0 to 8.0 wt.-% of repeating units derived from the compound represented by formula (I)

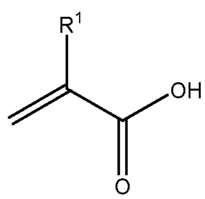

(I)

the substituent $R^1$ being a hydrogen atom or a hydrocarbon group having from 1 to 6 carbon atoms, preferably methyl,

optionally, from 0.0 to 19.9 wt.-%, preferably from 0.0 to 7.0 wt.-% of repeating units derived from methyl acrylate, ethyl acrylate or styrene; and

not more than 2.5 wt.-%, preferably not more than 2.0 wt.-% of repeating units represented by formula (II)

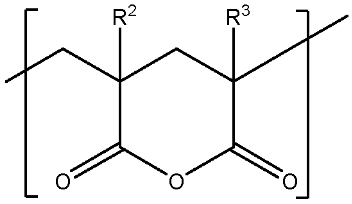

(II)

the substituents $R^2$ and $R^3$ being independently a hydrogen atom or a hydrocarbon group having from 1 to 6 carbon atoms, preferably both being represented by a methyl group.

In case that one or more of optional repeating units are present in the copolymer, typically the amount of repeating units derived from MMA can be adapted accordingly.

As outlined above, the process of the present invention efficiently suppresses undesired intramolecular cyclization reaction forming glutaric anhydride units represented by formula (II) from MAA units in the copolymer. As a consequence, formation of methanol and water as by-products during degassing of the copolymer melt is also suppressed. Furthermore, at preferred degassing conditions unreacted monomers such as MMA and MAA can be efficiently removed and therefore their concentration in the final copolymer is also low. Hence, the copolymer melt exiting the melt outlet die of the degassing unit has a particularly low content of volatile compounds. Such materials are not accessible using processes of the prior art.

In particular, the moulding composition may comprise as low as less than 1400 ppm, preferably not more than 1000 ppm methanol, based on the total weigh of the moulding composition.

It is also advantageous that the moulding composition comprises not more than 1800 ppm, preferably not more than 1500 ppm MAA, based on the total weigh of the moulding composition. Furthermore, the moulding composition of the present invention should advantageously comprise not more than 5000 ppm, preferably not more than 4000 ppm MMA, based on the total weigh of the moulding composition.

The mass average molecular weight Mw of the copolymer is not particularly limited and is typically about 40 000 to 500 000 g/mol, more preferably from 60 000 to 400 000 g/mol. The number average molecular weight Mn of the copolymer is preferably 20 000 to 150 000 g/mol, more preferably from 25 000 to 100 000 g/mol. Determination of Mw and Mn can be performed e.g. by means of gel permeation chromatography (GPC), for instance using PMMA as a calibration standard and tetrahydrofuran (THF) with 0.2 vol.-% trifluoracetic acid (TFA) as an eluent. As an alternative to using a calibration standard a scattering detector may also be employed for copolymers having Mw of more than 100 000 g/mol (*cf*. H. F. Mark et al., Encyclopaedia of Polymer Science and Engineering, 2nd. Edition, Vol. 10, page 1 et seq., J. Wiley, 1989). Appropriate GPC columns can be readily selected by a skilled person, for example HPS columns. Such columns are, for instance, commercially available from PSS Standards Service GmbH (Mainz, Germany) as columns of the PSS SDV series. As will be readily appreciated, a combination of several GPC columns may also be employed.

Due to diminished cyclisation of MAA units in the process step (c), the ratio of the weight of repeating units represented by formula (II)

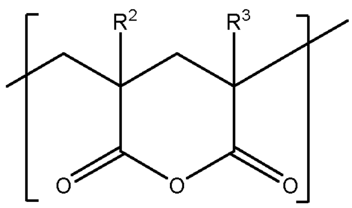

(II)

to the weight of repeating units derived from the compound represented by formula (I)

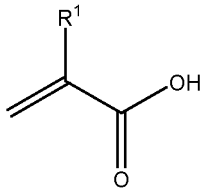

(I)

in the copolymer is below 0.2, preferably below 0.1.

**Further additives**

The moulding composition of the present invention may further contain at least one common polymer additive as long as the later do not adversely affect optical and adhesive properties of the copolymer of the present invention. Various polymer additives are well known to a skilled person and include *inter alia* impact modifiers, UV absorbers, UV stabilizers, light stabilizers, anti-oxidants, colourants, flow improvers, pigments, flame retardants, lubricants and demoulding aids, scattering particles, scratch improving aids, thermal stabilizers, antistatic additives, additives to increase the scratch resistance etc. Heat resistance of the resulting moulding composition should not be excessively impaired by these additives.

The additives can be added at any step of the manufacturing process as long as their presence does not interfere with the process. For instance, additives such as UV absorbers, lubricants, de-moulding aids and colourants such as pigments or dyes are often added during the polymerisation step (a) to the reaction vessel together with the monomers or separately. As a further possibility, these additives may be added to the copolymer melt in or after the degassing device in the degassing step (c).

<u>UV absorbers and UV stabilizers</u>

UV absorbers and UV stabilizers and light stabilizers for use in the present invention are well known and described in detail by way of example in Hans Zweifel, Plastics Additives Handbook, Hanser Verlag, 5th Edition, 2001, p. 141 ff. UV stabilizers are understood to include UV stabilizers and free-radical scavengers. Free radical scavengers are for example sterically hindered phenols like, without restrictions, octadecyl-3-[3,5-di-tert-butyl-4-hydroxyphenyl]propionate], pentaerythritol tetrakis[3-[3,5-di-tert-butyl-4-hydroxyphenyl]propionate and salicylic esters. UV absorbers can e.g. derive from the group of the substituted benzophenones, salicylic esters, cinnamic esters, oxanilides, benzoxazinones, hydroxyphenylbenzotriazoles, benzotriazoles, triazines or benzylidenemalonate. An example of hydroxyphenyl benzotriazole are 2-(2H-benzotriazol-2-yl)-p-cresol, sold as Tinuvin® P or Drometrizole, tetraethyl-2,2'-(1,4-phenylendimethylidyn)bismalonat, sold as Hostavin® B-CAP, n-(2-ethoxyphenyl)-n'-(4-ethylphenyl)-ethylene diamide sold as Tinuvin® 312. The total content of the UV absorbers in the moulding composition typically ranges from 0.01 wt.-% to 1.0 wt.-%, especially from 0.01 wt.-% to 0.5 wt.-%, in particular from 0.02 wt.-% to 0.2 wt.-%, based on the weight of the moulding composition.

The UV absorbers may be present in the moulding composition as low molecular weight compounds. However, UV-absorbing groups in the matrix copolymer molecules may also be covalently bonded after copolymerisation with polymerizable UV-absorbing compounds, such as, for example, acrylic, methacrylic or allyl derivatives of benzophenone derivatives or benzotriazole derivatives. As will be readily appreciated by a skilled person, mixtures of chemically different UV absorbers may also be employed, *e.g.* benzotriazoles in combination with triazines.

The best-known representatives of the UV stabilizers/free-radical scavengers are provided by the group of hydroxyphenyl benzotriazole or sterically hindered amines (hindered amine light stabilizer, HALS). Examples of suitable free radical scavengers/UV stabilisers include *inter alia* sterically hindered phenols and sterically hindered amines, which are known by the name HALS ((<u>H</u>indered <u>A</u>mine <u>L</u>ight <u>S</u>tabiliser). The tetramethylpiperidine group present in the HALS compounds is responsible for the stabilising effect thereof. This class of compounds may be either unsubstituted or substituted by alkyl or acyl groups on the piperidine nitrogen. The sterically hindered amines do not absorb in the UV range. They trap free radicals formed, which once again the UV absorbers are incapable of doing. The free radical scavengers / UV stabilisers are used in the compositions according to the invention in amounts of 0.01 wt.-% to 1.5 wt.-%, especially in amounts of 0.02 wt.-% to 1.0 wt.-%, in particular, in amounts of 0.02 wt.-% to 0.5 wt.-%, based on the weight of the moulding composition. Also, a combination of UV stabilisers / absorbers, light stabilizers and antioxidants are possible.

Thermal processing colour stabilizers

Suitable thermal processing colour stabilizers are not particularly limited and may be selected from e.g. triphenyl phosphates, tris-(2,4-di-tert-butylphenyl)-phosphate, tris-(2,5-di-tert-butylphenyl)-phosphate, triphenyl phoshites or tris-(2,4-di-tert-butylphenyl)-phosphite.

Scattering particles

In some embodiments of the present invention, the moulding composition may further comprise organic or inorganic scattering particles dispersed in the matrix of the polymer. Although the choice of the scattering particles is not particularly limited, they are typically selected in such a way that the refractive index of the scattering particles differs from that of the copolymer matrix by at least 0.01. The refractive index can be measured at the Na D-line at 589 nm at 23 °C as specified in the standard ISO 489 (1999).

The scattering particles usually have a weight average particle diameter of from 0.1 μm to 100.0 μm. The weight average particle diameter - indicated as so-called volume averaged $d_{50}$-value (that is 50 vol.-% of the particles have a particle size below the specified average particle size) of the scattering particles can be measured in accordance with the standard for laser diffraction measurements ISO 13320-1 (2009). Typically, the size of the scattering particles is determined in each case in dry powder form by laser light scattering (at room temperature, 23 °C) using Beckman Coulter LS 13 320 laser diffraction particle size analyser, tornado dry powder system. The measurement is carried out as described in the manual. For computer-aided analysis model Mie is used.

Inorganic scattering particles may include traditional inorganic opacifiers, *e.g.* barium sulphate, calcium carbonate, titanium dioxide or zinc oxide.

Organic scattering particles are typically spherical scattering beads consisting of a cross-linked polymeric material such as poly alkyl(meth) acrylates, silicones, polystyrenes *etc.* For the purposes of the present invention, the term "*spherical*" means that the scattering beads preferably have a spherical shape, but it is clear to the person skilled in the art that, as a consequence of the methods of production, it is also possible that scattering beads with some other shape may be present, or that the shape of the scattering beads may deviate from the ideal spherical shape. The term "*spherical*" therefore indicates that the ratio of the largest dimension of the scattering beads to the smallest dimension is not more than 4, preferably not more than 2, each of these dimensions being measured through the centre of gravity of the scattering beads. Based on the number of scattering beads, at least 70% are preferably spherical, particularly at least 90%.

Preferred scattering beads composed of crosslinked polystyrenes are commercially available from Sekisui Plastics Co., Ltd. with the trademarks Techpolymer® SBX-4, Techpolymer® SBX-6, Techpolymer® SBX-8 and Techpolymer® SBX-12.

Other particularly preferred spherical plastics particles which are used as scattering agents comprise cross-linked silicones. Silicone scattering agents particularly preferably used in the present invention are obtainable from Momentive Performance Materials Inc. as TOSPEARL® 120 and TOSPEARL® 3120.

Impact modifiers

Mechanical properties of the moulding composition may be additionally adjusted to the desired purpose if the thermoplastic copolymer comprises an impact modifier. Impact modifiers for use in the present invention *per se* are well known and may have different chemical compositions and different copolymer architectures. The impact modifiers may be crosslinked or thermoplastic. In addition, the impact modifiers may be in particulate form, as core-shell or as core-shell-shell particles. Typically, particulate impact modifiers have an average particle diameter between 20 nm and 500 nm, preferably between 50 nm and 450 nm, more preferably between 100 nm and 400 nm and most preferably between 150 nm and 350 nm. "*Particulate impact modifiers*" in this context means crosslinked impact modifiers which generally have a core, core-shell, core-shell-shell or core-shell-shell-shell structure. Average particle diameter of particulate impact modifiers can be determined by a method known to a skilled person, *e.g.* by photon correlation spectroscopy according to the norm DIN ISO 13321 : 1996.

In the simplest case, the particulate impact modifiers are crosslinked particles obtained by means of emulsion polymerisation whose average particle diameter is in the range from 10 nm to 150 nm, preferably from 20 nm to 100 nm, more preferably from 30 nm to 90 nm. These are generally composed of at least 20.0 wt.-%, preferably from 20.0 wt.-% to 99.0 wt.-%, particularly preferably in the range from 30.0 wt.-% to 98.0 wt.-% of butyl acrylate, and from 0.1 wt.-% to 2.0 wt.-%, preferably from 0.5 wt.-% to 1.0 wt.-% of a crosslinking monomer, *e.g.* a polyfunctional (meth)acrylate, *e.g.* allyl methacrylate and, if appropriate, other monomers, *e.g.* from 0.0 wt.-% to 10.0 wt.-%, preferably from 0.5 wt.-% to 5.0 % wt.-%, of C1-C4-alkyl methacrylates, such as ethyl acrylate or butyl methacrylate, preferably methyl acrylate, or other vinylically polymerizable monomers, *e.g.* styrene.

A three-layer or three-phase structure with a core and two shells can prepared as follows. The innermost (hard) core can, for example, be composed of MMA, of small proportions of comonomers, *e.g.* ethyl acrylate, and of a proportion of crosslinking agent, *e.g.* allyl methacrylate. The middle (soft) shell can, for example, be composed of a copolymer comprising butyl acrylate and, if appropriate, styrene, while the outermost (hard) shell is the same as the matrix polymer, thus bringing about compatibility and good linkage to the matrix. The proportion of polybutyl acrylate in the core or in the shell of the impact modifier of a two- or three-layer core-shell structure is decisive for the impact-modifying action and is preferably in the range from 20.0 wt.-% to 99.0 wt.-%, particularly preferably in the range from 30.0 wt.-% to 98.0 wt.-%, even more preferably in the range from 40.0 wt.-% to 97.0 wt.-%, based on the total weight of the impact modifier.

Thermoplastic impact modifiers have a different mechanism of action than particulate impact modifiers. They are generally mixed with the matrix material. In the case that domains are formed, as occurs, for example, in the case of use of block copolymers, preferred sizes for these domains, the size of which can be determined, for example, by electron microscopy, correspond to preferred sizes for the core-shell particles.

A further class of thermoplastic polymers for use according to the present invention as impact modifiers are methacrylate-acrylate block copolymers, especially acrylic TPE, which comprises PMMA-poly-*n*-butyl acrylate-PMMA triblock copolymers, and which are *e.g.* commercially available under the Kurarity® product name by Kuraray. The poly-*n*-butyl acrylate blocks form nanodomains in the copolymer matrix having a size between 10 nm and 20 nm.

Lubricants and mould release agents which can reduce or completely prevent possible adhesion of the moulding composition to the injection mould are important for the injection moulding process and may also be employed. For example, lubricants, selected from the group consisting of saturated fatty acids, esters or inorganic salts having less than $C_{20}$, preferably $C_{16}$ to $C_{18}$, carbon atoms or of the saturated fatty alcohols having less than $C_{20}$, preferably $C_{16}$ to $C_{18}$, carbon atoms, may be present as auxiliaries. For example, stearic acid, stearyl alcohol, palmitic acid, palmitic alcohol, lauric acid, lactic acid, glycerol monostearate, pentaerythrol, and industrial mixtures of stearic and palmitic acid. Also suitable are *n*-hexadecanol, *n*-octadecanol and industrial mixtures of *n*-hexadecanol and *n*-octadecanol and glycerol monostearate. A particularly preferred lubricant or mould release agent is stearyl alcohol. The lubricants are typically used in amounts of not more than 1.0 wt.-%, e.g. 0.05 wt.-% to 0.25 wt.-% based on the weight of the moulding composition.

Flow improvers can be optionally used to reduce melt viscosity of the copolymer composition. They typically consist usually of oligomers or can be selected from the group consisting of saturated fatty acids, esters or inorganic salts having preferably C16 carbon atoms or more of the saturated fatty alcohols or fatty acids, polyethylene glycols and glycerol monostearate. The flow improvers are typically used in amounts of not more than 5.0 wt.-%, e.g. 0.5 wt.-% to 4.0 wt.-% based on the weight of the moulding composition.

The moulding composition of the present can be optionally coloured in various colours using soluble organic dyes. Typically, perinone-, azo- and anthraquinone-type dyes are used for this purpose due to their commercial availability and bright colours. The term "*soluble*" as used in the present application indicates that the dye is soluble in the matrix of the thermoplastic copolymer in amounts in which it is used for colouring the same. Accordingly, a coloured moulding composition is a thermoplastic composition comprising an organic dye which is uniformly distributed in the matrix of the thermoplastic polymer.

The moulding composition of the present invention has an excellent transparency and a clear, substantially non-cloudy appearance. In particular, haze of the moulding composition measured at 23 °C on an injection moulded specimen having a thickness of 3.0 mm according to standard ASTM D1003 (2013) is normally lower than 5%, preferably lower than 3%, more preferably lower than 2%, particularly preferably lower than 1%.

Furthermore, the moulding composition without colour additives or colouring pigments preferably shows a light transmittance, $T_{D65}$ according to DIN 5033 - 7 (2014) in the range of 85 % to 93 %, more preferably in the range of 87 % to 92 %, measured at 23 °C on an injection moulded specimen having a thickness of 3.0 mm.

The yellowness index of the moulding composition without colour additives or colouring pigments, determinable according to DIN 6167 (1980) (illuminant $D_{65}$, 10° on 3.0 mm layer thickness) should preferably be less than 7, preferably less than 5, measured at 23 °C on an injection moulded specimen having a thickness of 3.0 mm, in the absence of added colourants or pigments.

Vicat softening temperature of the moulding composition according to ISO 306-B50 (2014) is advantageously at least 105 °C, preferably at least 110 °C, more preferably at least 115 °C. Nominal elongation at break of the moulding composition without impact modifier according to ISO 527 (2012) should preferably be at least 2.0 %, particularly preferably 2.5 % or higher.

Modulus of elasticity of the moulding composition according to ISO 527 (2012) is advantageously greater than 3000 MPa, preferably greater than 3500 MPa, if no impact modifier is present.

Due to its advantageous rheological properties, the moulding composition of the present invention is highly suitable for the manufacturing of optical elements by means of injection moulding. The composition of the present invention typically has a melt volume rate MVR measured according to ISO 1133 (2012) at 230 °C and 3.8 kg, of greater than 0.2 $cm^3$ / 10 min, preferably of greater than 0.4 $cm^3$ / 10 min, most preferably in the range from 0.6 $cm^3$ / 10 min to 15.0 $cm^3$ / 10 min.

The moulding composition of the present invention can be thermoplastically processed by common methods such as injection moulding and extrusion to moulded articles. The injection moulding of the composition can be performed in a known manner at temperatures in the range of from 200 °C to 300 °C (melt temperature) and a mould temperature of preferably from 60 °C to 120 °C. The extrusion is preferably carried out at a temperature of from 200 °C to 280 °C.

Because of its high heat resistance, low haze and a high content of free carboxylic acid groups, the moulding composition and moulded article made thereof are highly suitable for optical applications in with acrylic elements are tightly bound to structural metallic or ceramic elements. For example, such applications include optoelectronic devices, preferably light emitting diodes, optical sensors or a solar cells; optical elements; optical lenses; light guides; lamp covers, preferably for room lighting systems or automobile lighting equipment, black coloured pillar trims; covers for automobile lights. The moulding composition of the invention can be further advantageously used in displays for communication devices, especially PDAs, mobile phones, preferably smartphones; tablet PCs; TV devices; kitchen appliances, street lights and other electronic devices.

The following examples illustrate the invention in detail. However, there is no intention that the present invention is restricted to these examples.

## Examples

### Analysis

GPC Measurement conditions

| | |
|---|---|
| Eluent: | THF (HPLC-grade) + 0.2 vol.-% TFA |
| Flow rate: | 1 ml / min |
| Injected volume: | 100 µl |
| Detection: | RI HPS |
| Concentration of sample solution: | 2 g/l |
| Standard: | PMMA |

Product properties

3.0 mm thick specimens were prepared by injection moulding at 250 °C and subsequently stored for 72 h at 23 °C and relative humidity of 50 % before the measurements.

Haze was determined using hazemeter BYK Gardner Hazegard-plus according to ASTM D 1003 (1997).

Vicat softening temperature VST ISO 306-B50 (2014) was measured using 3.0 mm thick specimens which were stored for 16 h at 100 °C before the measurements.

### Copolymer composition

Determination of methanol residuals in the final copolymer

Calibration method: external standard

Preparation of the copolymer solution for the analysis:

1000 mg of the copolymer were weighted into an Erlenmeyer flask and 20 ml of N,N-dimethyl formamide (DMF) were added. The sample was dissolved overnight by shaking and the content of methanol was determined by gas chromatography (GC).

Determination of monomer MMA residuals in the final copolymer

Calibration method: external standard

Preparation of the copolymer solution for the analysis:

1000 mg of the copolymer were weighed into an Erlenmeyer flask and 20 ml of DMF were added. The sample

was dissolved overnight by shaking and the content of MMA residuals was determined by GC.

GC analysis in a headspace gas chromatograph

| | |
|---|---|
| Chromatograph: | Perkin Elmer Clarus 500 or 600 series with a TurboMatrix headspace sampler |
| Detector: | FID |
| Headspace: | needle pressure: 123 kPa,<br>infector pressure: 137.9 kPa,<br>sample temp: 80 °C,<br>needle temp: 120 °C,<br>transfer temp: 120 °C,<br>thermostating time: 20 min,<br>pressurizing time: 1 min,<br>withdrawal time: 0.2 min,<br>cycle time: 15.5 min |
| Column: | Megabore FFAP, 530 μm x 30 + 30 m,<br>separating phase: polyethylenglycol with nitroterephthalic acid,<br>carrier gas: nitrogen |
| Temperatures: | column: 55 °C<br>injector: 130 °C<br>detector: 250 °C |
| Analysis time: | 8.5 min |

Content calculation was performed with a software, based on the calibration constants.

Determination of monomer MAA residuals in the final copolymer

Calibration method: external standard

Preparation of the copolymer solution for the analysis:

2 g of the copolymer were dissolved in 50 ml acetone, 5 ml of this solution were poured into 20 ml of a methanol / water mixture 70 : 30. 5 ml of that solution were poured into 20 ml of ultrapure water and the content of MAA residuals was determined by high performance liquid chromatography (HPLC).

HPLC analysis with an Agilent HPLC device

| | |
|---|---|
| Detector: | UV 200 nm |
| Column: | Nucleosil 100-7, C18, 125 × 4.6 mm |
| Elution agent: | methanol / $H_3PO_4$ pH2 = 20 : 80 |
| Flow rate: | 2 ml / min |
| Sample volume: | 50 μl |

Content calculation was performed on the basis of the peak area with a software, based on calibration constants.

Determination of MAA units and glutaric anhydride units in the final copolymer

A two-step analysis with a hydrolysis step was carried out as follows:
Titration before hydrolysis:
0.5 g of the copolymer were dissolved in 80 ml of pyridine at 50 °C and the solution was titrated.

Every measurement was accompanied by two blank feed measurements (same procedure but without the copolymer sample).

Titration after hydrolysis:

0.5 g of the copolymer were dissolved in 40 ml of pyridine at 50 °C. 15 ml of demineralized water were added and kept at 98 °C for 2 h for hydrolysis. Additional 40 ml of pyridine were added, the mixture was homogenized and titrated. Every measurement was accompanied by two blank feed measurements (same procedure but without the copolymer sample).

| | |
|---|---|
| Titration device: | 808 Titrando from Metrohm AG |
| | Combined glass electrode (LiCl in ethanol) |
| Titrant: | tetramethylammonium hydroxide (TMAH) as an alcoholic solution, 0.1 mol/l (0.1 N) |

Acid values were calculated as follows:

Acid value AV1 (given in mg KOH / g) before hydrolysis:

$$AV1 = ( (V1 - BW) \cdot \Theta \cdot 5.6106) / E, \text{ mg KOH / g}$$

Acid value AV2 (given in mg KOH / g) after hydrolysis:

$$AV2 = ( (V2 - BW) \cdot \Theta \cdot 5.6106) / E, \text{ mg KOH / g}$$

wherein

V is titrant consumption (before hydrolysis V1 and after hydrolysis V2), ml
BW is titrant consumption for the solvents (blank feed measurement), ml
$\Theta$ is titre factor of the titrant
E is the sample weight, g

Contents of MAA units and glutaric anhydride units were calculated as follows:
Content of glutaric anhydride units, wt.-% = AV glutaric anhydride units · 100 / 727.9 wherein AV glutaric anhydride units = (AV2 - AV1) · 2
Content of MAA units, wt.-% = AV MAA · 100 /651.7
wherein AV MAA = AV2 - AV glutaric anhydride units

Starting materials

The following starting materials were used:

MMA, purity of > 99.6 wt.-% from Röhm GmbH, Darmstadt, Germany
MAA, purity of > 99.6 wt.-% from Röhm GmbH, Darmstadt, Germany

Kinetic studies

Formation of glutaric anhydride units in MMA-MAA copolymers as a function of temperature and residence time was investigated.
Two MMA-MAA copolymers comprising 96 wt.-% and 95 wt.-% MMA and 4 wt.-% and 5 wt.-% MAA, respectively, were prepared in a laboratory scale in a continuous stirred tank reactor, at polymerization temperature of 140 °C, with a conversion of 45 % and residence time in the reactor of 40 min. Copolymer mixture in form of a copolymer syrup comprising 45 wt.-% of the copolymer was subsequently heated up to 210 °C and fed to a laboratory single screw extruder with 18 mm screw diameter. The degassing was performed at 250 °C (barrel temperature) at absolute pressure of 40 mbar in the last degassing zone (vacuum zone). The copolymer melt outlet of the degassing extruder was directly connected to the melt outlet die, without any conduits or melt filters.

Due to the small size of the degassing extruder and low residence times t the amounts of formed glutaric anhydride units in the copolymers were 400 ppm and 500 ppm, respectively. The contents of MAA residues in the copolymers were 450 ppm and 550 ppm, respectively.

Samples of the copolymers were preheated to 180 °C and then placed in an oven under helium atmosphere and ambient pressure at temperatures between 200 °C and 280 °C for 5 to 30 minutes. Subsequently, the contents of glutaric anhydride units and MAA residues in the samples were determined. Based on these data an empirical mathematical model for the formation of glutaric anhydride units was elaborated.

The obtained mathematical model was used as a basis for further experiments on a production scale.

**Examples 1, 2 (inventive) and 3 (comparative)**

MMA-MAA copolymers comprising 4.4 wt.-% and 5 wt.-% MAA were produced according to the following procedure.

A mixture of monomeric MMA and MAA was continuously fed to a continuous stirred tank reactor (CSTR) together with radical polymerization initiators and a chain transfer agent. The polymerization was performed at 150 °C with reactor residence times of 40 to 100 minutes and a total conversion of 48 to 50 %. The copolymer syrup from the outlet of the CSTR was heated using a heat exchanger to about 210 to 225 °C and then fed into the copolymer syrup feed port of the degassing extruder.

Degassing of the copolymer syrup was performed on a single screw extruder under vacuum in the last degassing zone. The vapours of unreacted monomers were condensed, combined with virgin MMA and MAA and led back to the reactor. The degassing extruder was equipped with a thermocouple in the last degassing zone which was placed 5 mm in the degassed monomer vapours above the copolymer melt to measure the copolymer melt temperature *Tv* in the last degassing zone. The degassed copolymer melt was transported by the screw after the last degassing zone of the extruder with a pressure built-up to the copolymer melt outlet of the extruder, further transported just by pressure to the melt pipe, melt filter and, finally, to the melt outlet die. The average pressure of the copolymer melt after the last degassing zone was about 40 to 70 bar (4 to 7 MPa). The temperature of the copolymer melt *To,* °C was measured in the middle of the entrance of the melt outlet die.

The pressure which was required to press the degassed copolymer melt through the copolymer melt outlet, the melt filter and the melt outlet die was generated in the metering zone of the degassing extruder by the extruder screw located just behind the degassing dome of the last degassing zone. The melt filter was connected by means of a conduit with the copolymer melt outlet of the extruder. The other side of the melt filter was connected to the melt outlet die.

The copolymer melt exiting the melt outlet die was immediately cooled with water and pelletized. Subsequently, the contents of methanol residuals, MAA residuals, MMA residuals as well as contents of MAA units and glutaric anhydride units in the copolymer were analytically determined as described above.

The process parameters of the degassing step in Examples 1-3 are summarised in Table 1.

An experimentally determined correlation between pressure, temperature and specific volume v, ml / g of a copolymer melt consisting of 95 wt.-% MMA and 5 wt.-% MAA, which is known from the literature, was used as a basis for the calculation of the specific volumes v, ml /g of copolymer melts in Examples 1-3. Pressure losses in the melt pipe, the melt filter and the melt outlet die were neglected. The specific volumes v were calculated as:

$$v = 0.796 + 5.26 \cdot 10^{-4} \cdot (1.5 \cdot Tv + 0.5 \cdot To) / 2$$

wherein *Tv,* °C is the temperature of the copolymer melt in the last degassing zone, in relation to the direction of conveying of the copolymer melt; and

*To,* °C is the temperature of the copolymer melt entering the melt outlet die.

The term (1.5 . *Tv* + 0.5 · *To*) / *2* represents the weighted estimated average temperature between the last degassing zone of the extruder and the melt outlet die. Because of high viscosity of the copolymer melt, low radial mixing, limited heat transfer and low heat conductivity between the last degassing zone and the melt outlet die, the temperature difference between *Tv* and *To* is relatively small.

Table 1 Process parameters in Examples 1-3 in the degassing step

| | **Zone 1 barrel** | **Pressure in vacuum zone** | **Vacuum zone temp., *Tv*** | **Metering zone barrel temp.** | **Melt conduit jacket temp.** | **Melt filter jacket temp.** | **Die jacket temp.** | **Die temp., *To*** | **Specific volume, *v*** | **Residence time, t** |
|---|---|---|---|---|---|---|---|---|---|---|
| | [°C] | [mbar] | [°C] | [°C] | [°C] | [°C] | [°C] | [°C] | [ml/g] | [sec] |
| **Example 1 (inventive)** | 280 | 100 | 266 | 225 | 255 | 255 | 255 | 268 | 0.936 | 102 |
| **Example 2 (inventive)** | 270 | 90 | 265 | 240 | 225 | 230 | 257 | 269 | 0.936 | 93 |
| **Example 3 (comparative)** | 285 | 80 | **281** | 175 | 223 | 255 | 255 | **285** | 0.944 | 89 |

The residence time *t* is the average residence time of the degassed copolymer melt in the degassing device after the last degassing zone plus the average residence time of the copolymer melt in the optional melt conduit volume plus the average residence time of the copolymer melt in an optional melt filter volume plus the average residence time in any optional copolymer melt containing volume plus the average residence time in an optional copolymer melt die.

The residence time *t* between the last degassing zone and the melt outlet die was calculated for the Examples 1-3 according to relationship

$$t = (Vv + Vc + Vf + Vd) / (c \cdot v)$$

wherein

$Vv$ is extruder volume filled with the copolymer melt after the last degassing zone, where the pressure build up starts,
$Vc$ is melt conduit volume filled with the copolymer melt,
$Vf$ is melt filter volume filled with the copolymer melt,
$Vd$ is melt outlet die volume filled with the copolymer melt,
$c$ is melt mass flow,
$v$ is specific volume.

The content of glutaric anhydride units formed after the vacuum zone (*cf.* Table 2) was calculated on the basis of the measured methanol residuals in the final copolymer and upon relying on the following assumptions: The first assumption was that the content of glutaric anhydride units formed after the last degassing zone of the extruder can be calculated from the content of methanol residuals in the copolymer melt in the final copolymer. The second assumption was that the degassing in the last degassing zone (vacuum zone) leads to a neglectable methanol residuals content in the copolymer melt if the pressure in the last degassing zone is below 300 mbar. Thus, entire methanol residuals measured in the final copolymer were assumed to have been formed during the undesired glutaric anhydride units formation after the last degassing zone.

The content of glutaric anhydride units formed before the vacuum zone (*cf.* Table 2) was calculated as a difference between the content of glutaric anhydride units in the final copolymer and the content of glutaric anhydride units formed after the vacuum zone.

Subsequently, the observed glutaric anhydride unit formation was validated based on a mathematical kinetic model.

Table 2 Composition of the final copolymers of Examples 1-3 and of copolymer melts during the degassing step (c)

| | MAA feed in step (a) | Final copolymer composition | | | | | Glutaric anhydride units formed before the vacuum zone | Glutaric anhydride units formed after the vacuum zone | Undesired consumption of MAA units after the vacuum zone | Loss factc *L* |
|---|---|---|---|---|---|---|---|---|---|---|
| | | MeOH residuals | MAA residuals | MMA residuals | MAA units | Glutaric anhydride units | | | | |
| | [wt.-%] | [ppm] | [ppm] | [ppm] | [wt.-%] | [wt.-%] | [wt.-%] | [wt.-%] | [% of MAA feed] | [% of MAA feed] |
| **Example 1 (inventive)** | 5.0 | 800 - 900 | 1300 | 2500 | 4.44 | 1.00 | 0.615 - 0.567 | 0.385 - 0.433 | 4.30 - 4.84 | 4.89 |
| **Example 2 (inventive)** | 4.4 | 700 - 750 | 1100 | 3500 | 4.11 | 0.7 | 0.363 - 0.339 | 0.337 - 0.361 | 4.18 - 4.48 | 4.36 |
| **Example 3 (comparative)** | 5.0 | 1700 - 1800 | 1200 | 2900 | 3.99 | 1.8 | 0.982 - 0.934 | 0.818 - 0.866 | 9.14-9.68 | 9.48 |

The correlation below was developed from the glutaric anhydride units formation kinetic and evaluation of the technical and production scale trials. This equation describes the loss factor *L,* in % of MAA units between the vacuum zone of the extruder and the melt outlet die, based on the total weight of the MAA reactor feed in the step (a).

$$L = 4.981 \cdot 10^{-8} \cdot t \cdot exp\,(0.0517 \cdot (1.5 \cdot Tv + 0.5 \cdot To) / 2)$$

To minimize the loss of MAA units in the copolymer, the loss factor *L* should be kept low, *e.g.* below 8. This means that *e.g.* less than 8 % of MAA units in the copolymer melt are converted to glutaric anhydride units, based on the MAA in the reactor feed:

$$L > 4.981 \cdot 10^{-8} \cdot t \cdot exp\,(0.0517 \cdot (1.5 \cdot Tv + 0.5 \cdot To) / 2)$$

Temperature of the copolymer melt *Tv,* °C in the last degassing zone in Examples 1 and 2 (inventive) was 266 °C and 265 °C, respectively. In contrast, the temperature of the copolymer melt *Tv*, °C in the last degassing zone in the last degassing zone in Example 3 (comparative) was 281 °C.

Also, the temperatures *To* of the copolymer entering the melt outlet die in Examples 1 and 2 (inventive) were significantly lower than then in Example 3 (comparative). As a consequence, the term

$$4.981 \cdot 10^{-8} \cdot t \cdot exp\,(0.0517 \cdot (1.5 \cdot Tv + 0.5 \cdot To) / 2)$$

in Examples 1 and 2 was below 8 and in Example 3 higher than 8 (cf. Table 2).

As a consequence, the glutaric anhydride units content in the final copolymer of Example 3 was 1.8 wt.-% and the content of methanol was even as high as 1700 to 1800 ppm i.e. significantly higher than in Examples 1 and 2. At the same time the content of MAA units in the copolymer of Example 3 was only 3.99 wt.-% i.e. significantly lower than in inventive Example 1. A lower content of MAA units is disadvantageous in terms of adhesion properties to metallic surfaces because carboxylic groups are well known to chemically interact with metallic surfaces thereby contributing to a strong adhesive joint.

A comparison between copolymers of Examples 1 (inventive) and 3 (comparative) further indicates that the copolymer of Example 1 has a higher Vicat temperature (*cf.* Table 3). All tested copolymers had a low haze and substantially no yellow tinge.

Table 3. Properties of the copolymers

| | Vicat, °C | Haze, % | Mw, g/mol | Mn, g/mol |
|---|---|---|---|---|
| **Example 1 (inventive)** | 117.7 | 0.28 | 94300 | 48680 |
| **Example 2 (inventive)** | 116.2 | 0.31 | 96300 | 49600 |
| **Example 3 (comparative)** | 116.2 | 0.29 | 92600 | 48700 |

In summary, the copolymers of Examples 1 and 2 had a particularly high content of free carboxylic acids groups, a high heat resistance and excellent optical properties, in particular a low haze and substantially no yellow tinge.

Examples 1-3 show that the undesired formation of glutaric anhydride units from MAA units in the copolymer melt can be substantially supressed while the contents of MMA and MAA residuals are kept low by adjusting the temperature of the copolymer melt *Tv,* °C in the last degassing zone, the temperature of the copolymer melt *To,* °C entering the melt outlet die and the total residence time *t,* s of the copolymer melt between the last degassing zone and the melt outlet die of the devolatilization unit.

**Claims**

**1.** A process for the manufacturing of a moulding composition comprising a copolymer, the process comprising the following steps:

(a) a polymerisation step, in which a monomer mixture comprising

from 80.0 to 99.9 wt.-%, preferably from 85.0 to 98.0 wt.-% of methyl methacrylate; and
from 0.1 to 20.0 wt.-%, preferably from 2.0 to 8.0 wt.-% of compound represented by formula (I)

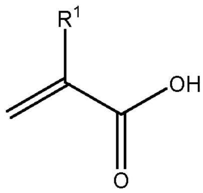

(I)

the substituent $R^1$ being a hydrogen atom or a hydrocarbon group having from 1 to 6 carbon atoms,
optionally, from 0.0 to 19.9 wt.-%, preferably from 0.0 to 7.0 wt.-% of a monomer selected from methyl acrylate, ethyl acrylate or styrene;
a polymerisation initiator; and
optionally, a chain transfer agent
undergoes radical copolymerisation in a polymerisation reactor to form a copolymer mixture comprising the copolymer and volatile components;

(b) optionally, a step of heating the copolymer mixture, obtained in the polymerisation step (a) to a temperature from 100 °C to 300 °C in a heating unit; and
(c) a degassing step of removal of the volatile components from the copolymer mixture to form

a copolymer melt in a degassing unit, the degassing unit comprising
at least one copolymer mixture feed port,
at least one degassing device, the degassing device comprising

at least one degassing zone,
at least one gas outlet
at least one copolymer melt outlet,

and at least one melt outlet die,
wherein temperature of the copolymer melt *Tv,* °C in the last degassing zone, in relation to the direction of conveying of the copolymer melt, temperature of the copolymer melt *To,* °C entering the melt outlet die and total residence time t, s of the copolymer melt between the last degassing zone, and the melt outlet die of the degassing unit are adjusted in such a way that the term

$$4.981 \cdot 10^{-8} \cdot t \cdot exp\,(0.0517 \cdot (1.5 \cdot Tv + 0.5 \cdot To)\,/\,2)$$

is lower than 8, preferably lower than 6, even more preferably lower than 4, particularly preferably lower than 2.

**2.** The process according to claim 1, wherein the term (1.5 . *Tv* + 0.5 · *To)* /2), °C of the copolymer melt in the last degassing zone of the degassing device in the degassing step (c) is between 230 °C and 290 °C.

**3.** The process according to claim 1 or 2, wherein the total residence time t, s of the copolymer melt between the last degassing zone, in relation to the direction of conveying of the copolymer melt, and the melt outlet die is in the range of 10 s to 200 s.

**4.** The process according to any of claims 1 to 3, wherein the degassing unit employed in the degassing step (c) further comprises at least one melt filter, located between the last degassing zone of the degassing device and the melt outlet die.

**5.** The process according to any of claims 1 to 4, wherein absolute pressure in the last degassing zone of the degassing device, in relation to the direction of conveying of the copolymer melt, is in the range of 100 Pa (1 mbar) to 30000 Pa (300 mbar) preferably in the range of 1000 Pa (10 mbar) to 20000 Pa (200 mbar).

6. The process according to any of claims 1 to 5, wherein the polymerisation reactor in the step (a) is a discontinuously or continuously operated stirred tank reactor, a continuously operated tubular reactor, a discontinuously or continuously operated loop reactor or a combination of any those, and wherein if several reactors are employed, they are operated in parallel or are sequentially connected.

7. The process according to any of claims 1 to 6, wherein the degassing device in the degassing step (c) is selected from a degassing extruder, degassing kneader and one or several flash chambers.

8. The process according to any of claims 1 to 7, wherein the copolymer comprises

from 80.0 to 99.5 wt.-%, preferably from 85.0 to 98.0 wt.-% of repeating units derived from methyl methacrylate; from 0.5 to 20.0 wt.-%, preferably from 2.0 to 8.0 wt.-% of repeating units derived from the compound represented by formula (I)

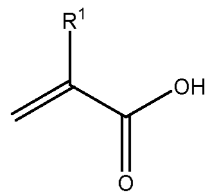

(I)

the substituent $R^1$ being a hydrogen atom or a hydrocarbon group having from 1 to 6 carbon atoms, preferably a methyl group; and, optionally
from 0.0 to 19.5 wt.-%, preferably from 0.0 to 7.0 wt.-% of repeating units derived from methyl acrylate, ethyl acrylate or styrene.

9. A moulding composition obtainable by the process according to any of claims 1 to 8, the moulding composition comprising a copolymer, the copolymer comprising

from 80.0 to 99.9 wt.-%, preferably from 85.0 to 98.0 wt.-% of repeating units derived from methyl methacrylate; and
from 0.1 to 20.0 wt.-%, preferably from 2.0 to 8.0 wt.-% of repeating units derived from the compound represented by formula (I)

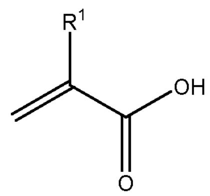

(I)

the substituent $R^1$ being a hydrogen atom or a hydrocarbon group having from 1 to 6 carbon atoms, $R^1$ being preferably represented by a methyl group;
optionally, from 0.0 to 19.9 wt.-%, preferably from 0.0 to 7.0 wt.-% of repeating units derived from methyl acrylate, ethyl acrylate or styrene; and
not more than 1.5 wt.-%, preferably not more than 1.0 wt.-% of repeating units represented by formula (II)

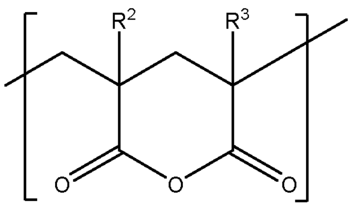

(II)

the substituents $R^2$ and $R^3$ being independently a hydrogen atom or a hydrocarbon group having from 1 to 6 carbon atoms, $R^2$ and $R^3$ being preferably represented by a methyl group.

**10.** The moulding composition according to claim 9, wherein the moulding composition comprises not more than 1400 ppm, preferably not more than 1000 ppm methanol, and / or not more than 1800 ppm, preferably not more than 1500 ppm methacrylic acid and / or not more than 5000 ppm, preferably not more than 4000 ppm methyl methacrylate.

**11.** The moulding composition according to claim 9 or 10, wherein the copolymer has a weight average molecular weight, determined by GPC, of from 60 000 g/mol to 400 000 g/mol.

**12.** The moulding composition according to any of claims 9 to 11, wherein the ratio of the weight of repeating units represented by formula (II)

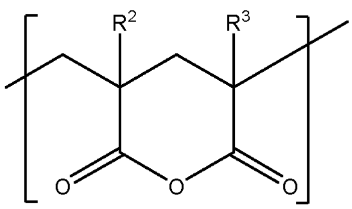

(II)

to the weight of repeating units derived from the compound represented by formula (I)

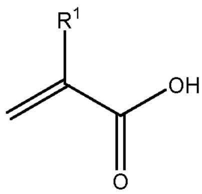

(I)

is below 0.2, preferably below 0.1.

**13.** The moulding composition according to any of claims 9 to 12 further comprising at least one additive selected from UV absorbers, UV stabilizers, anti-oxidants, colourants, flow improver, scattering aids, lubricants, processing colour stabilizers, demoulding aids or a combination of any of those.

**14.** Moulded article obtainable from a moulding composition according any of claims 9 to 13 by a process selected from injection moulding and extrusion.

**15.** Use of a moulded article according to Claim 14 as a component of an optoelectronic device, preferably light emitting diode, optical sensor or a solar cell; optical element; lamp cover, light guide, optical lens, preferably for room lighting systems or automobile lighting equipment, black coloured pillar trim.

## Patentansprüche

1. Verfahren zur Herstellung einer Formmasse, die ein Copolymer umfasst, wobei das Verfahren die folgenden Schritte umfasst:

   (a) einen Polymerisationsschritt, bei dem man eine Monomerenmischung, umfassend

   80,0 bis 99,9 Gew.-%, vorzugsweise 85,0 bis 98,0 Gew.-%, Methylmethacrylat und
   0,1 bis 20,0 Gew.-%, vorzugsweise 2,0 bis 8,0 Gew.-%, einer Verbindung, die durch Formel (I)

   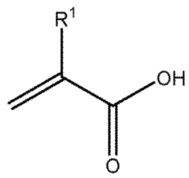

   (I)

   wiedergegeben wird,
   wobei der Substituent $R^1$ für ein Wasserstoffatom oder eine Kohlenwasserstoffgruppe mit 1 bis 6 Kohlenstoffatomen steht, gegebenenfalls 0,0 bis 19,9 Gew.-%, vorzugsweise 0,0 bis 7,0 Gew.-%, eines Monomers, das aus Methylmethacrylat, Ethylacrylat oder Styrol ausgewählt ist;
   einen Polymerisationsinitiator und gegebenenfalls ein Kettenübertragungsmittel in einem Polymerisationsreaktor radikalisch copolymerisiert, was eine Copolymermischung ergibt, die das Copolymer und flüchtige Komponenten umfasst;

   (b) gegebenenfalls einen Schritt des Erhitzens der im Polymerisationsschritt (a) erhaltenen Copolymermischung auf eine Temperatur von 100 °C bis 300 °C in einer Heizeinheit und
   (c) einen Entgasungsschritt des Entfernens von flüchtigen Komponenten aus der Copolymermischung unter Bildung einer Copolymerschmelze in einer Entgasungseinheit, wobei die Entgasungseinheit

   mindestens eine Öffnung zur Einspeisung der Copolymermischung,
   mindestens eine Entgasungsvorrichtung, wobei die Entgasungsvorrichtung
   mindestens eine Entgasungszone, mindestens einen Gasauslass und mindestens einen Auslass für die Copolymerschmelze
   umfasst,
   und mindestens eine Schmelzeauslassdüse umfasst,

   wobei die Temperatur der Copolymerschmelze *Tv,* °C in der letzten Entgasungszone in Bezug auf die Beförderungsrichtung der Copolymerschmelze, die Temperatur der in die Schmelzeauslassdüse eintretenden Copolymerschmelze *To,* °C und die Gesamtverweilzeit *t*, s der Copolymerschmelze zwischen der letzten Entgasungszone und der Schmelzeauslassdüse der Entgasungseinheit so eingestellt werden, dass der Term

   $$4{,}981 \cdot 10^{-8} \cdot t \cdot \exp(0{,}0517 \cdot (1{,}5 \cdot Tv + 0{,}5 \cdot To) / 2)$$

   kleiner als 8, vorzugsweise kleiner als 6, noch weiter bevorzugt kleiner als 4, besonders bevorzugt kleiner als 2, ist.

2. Verfahren nach Anspruch 1, wobei der Term (1,5 · *Tv* + 0,5 · *To*) / 2), °C der Copolymerschmelze in der letzten Entgasungszone der Entgasungsvorrichtung im Entgasungsschritt (c) zwischen 230°C und 290 °C liegt.

3. Verfahren nach Anspruch 1 oder 2, wobei die Gesamtverweilzeit *t*, s der Copolymerschmelze zwischen der letzten Entgasungszone in Bezug auf die Beförderungsrichtung der Copolymerschmelze und der Schmelzeauslassdüse im Bereich von 10 s bis 200 s liegt.

4. Verfahren nach einem der Ansprüche 1 bis 3, wobei die im Entgasungsschritt (c) eingesetzte Entgasungseinheit ferner mindestens ein Schmelzefilter umfasst, der sich zwischen der letzten Entgasungszone der Entgasungsvorrichtung und der Schmelzeauslassdüse befindet.

5. Verfahren nach einem der Ansprüche 1 bis 4, wobei der Absolutdruck in der letzten Entgasungszone der Entgasungsvorrichtung in Bezug auf die Beförderungsrichtung der Copolymerschmelze im Bereich von 100 Pa (1 mbar) bis 30.000 Pa (300 mbar), vorzugsweise im Bereich von 1000 Pa (10 mbar) bis 20.000 Pa (200 mbar), liegt.

6. Verfahren nach einem der Ansprüche 1 bis 5, wobei es sich bei dem Polymerisationsreaktor in Schritt (a) um einen diskontinuierlich oder kontinuierlich betriebenen Rührkesselreaktor, einen kontinuierlich betriebenen Rohrreaktor, einen diskontinuierlich oder kontinuierlich betriebenen Schlaufenreaktor oder eine Kombination von beliebigen davon handelt und wobei dann, wenn mehrere Reaktoren eingesetzt werden, diese parallel betrieben oder hintereinander geschaltet werden.

7. Verfahren nach einem der Ansprüche 1 bis 6, wobei die Entgasungsvorrichtung im Entgasungsschritt (c) aus einem Entgasungsextruder, einem Entgasungskneter und einer oder mehreren Flashkammern ausgewählt wird.

8. Verfahren nach einem der Ansprüche 1 bis 7, wobei das Copolymer

80,0 bis 99,5 Gew.-%, vorzugsweise 85,0 bis 98,0 Gew.-%, Wiederholungseinheiten, die sich von Methylmethacrylat ableiten;
0,5 bis 20,0 Gew.-%, vorzugsweise 2,0 bis 8,0 Gew.-%, Wiederholungseinheiten, die sich von der Verbindung, die durch Formel (I)

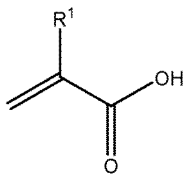

(I)

wiedergegeben wird, ableiten,
wobei der Substituent $R^1$ für ein Wasserstoffatom oder eine Kohlenwasserstoffgruppe mit 1 bis 6 Kohlenstoffatomen, vorzugsweise eine Methylgruppe, steht; und gegebenenfalls
0,0 bis 19,5 Gew.-%, vorzugsweise 0,0 bis 7,0 Gew.-%, Wiederholungseinheiten, die sich von Methylacrylat, Ethylacrylat oder Styrol ableiten; umfasst.

9. Formmasse, die durch das Verfahren nach einem der Ansprüche 1 bis 8 erhältlich ist, wobei die Formmasse ein Copolymer umfasst, wobei das Copolymer

80,0 bis 99,9 Gew.-%, vorzugsweise 85,0 bis 98,0 Gew.-%, Wiederholungseinheiten, die sich von Methylmethacrylat ableiten; und
0,1 bis 20,0 Gew.-%, vorzugsweise 2,0 bis 8,0 Gew.-%, Wiederholungseinheiten, die sich von der Verbindung, die durch Formel (I)

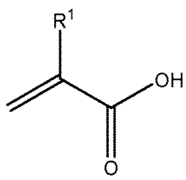

(I)

wiedergegeben wird, ableiten,
wobei der Substituent $R^1$ für ein Wasserstoffatom oder eine Kohlenwasserstoffgruppe mit 1 bis 6 Kohlenstoff-

atomen steht, wobei $R^1$ vorzugsweise durch eine Methylgruppe wiedergegeben wird; gegebenenfalls 0,0 bis 19,9 Gew.-%, vorzugsweise 0,0 bis 7,0 Gew.-%, Wiederholungseinheiten, die sich von Methylacrylat, Ethylacrylat oder Styrol ableiten; und
nicht mehr als 1,5 Gew.-%, vorzugsweise nicht mehr als 1,0 Gew.-%, Wiederholungseinheiten, die durch Formel (II)

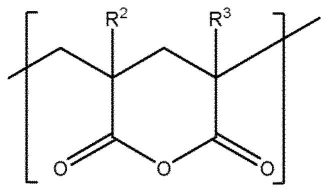

(II)

wiedergegeben werden, wobei die Substituenten $R^2$ und $R^3$ unabhängig für ein Wasserstoffatom oder eine Kohlenwasserstoffgruppe mit 1 bis 6 Kohlenstoffatomen stehen, wobei $R^2$ und $R^3$ vorzugsweise durch eine Methylgruppe wiedergegeben werden;
umfasst.

**10.** Formmasse nach Anspruch 9, wobei die Formmasse nicht mehr als 1400 ppm, vorzugsweise nicht mehr als 1000 ppm, Methanol und/oder nicht mehr als 1800 ppm, vorzugsweise nicht mehr als 1500 ppm, Methacrylsäure und/oder nicht mehr als 5000 ppm, vorzugsweise nicht mehr als 4000 ppm, Methylmethacrylat umfasst.

**11.** Formmasse nach Anspruch 9 oder 10, wobei das Copolymer ein gewichtsmittleres Molekulargewicht, bestimmt durch GPC, von 60.000 g/mol bis 400.000 g/mol aufweist.

**12.** Formmasse nach einem der Ansprüche 9 bis 11, wobei das Verhältnis des Gewichts von Wiederholungseinheiten, die durch Formel (II)

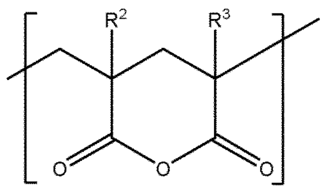

(II)

wiedergegeben werden, zum Gewicht von Wiederholungseinheiten, die sich von der durch Formel (I)

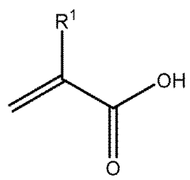

(I)

wiedergegebenen Verbindung ableiten, unter 0,2, vorzugsweise unter 0,1, liegt.

**13.** Formmasse nach einem der Ansprüche 9 bis 12, ferner umfassend mindestens ein Additiv, das aus UV-Absorbern, UV-Stabilisatoren, Antioxidantien, Farbmitteln, Fließverbesserern, Streuungshilfsmitteln, Schmiermitteln, Verarbeitungsfarbstabilisatoren, Entformungshilfsmitteln oder einer Kombination von beliebigen davon ausgewählt ist.

**14.** Formkörper, der aus einer Formmasse nach einem der Ansprüche 9 bis 13 durch ein aus Spritzguss und Extrusion ausgewähltes Verfahren erhältlich ist.

**15.** Verwendung eines Formkörpers nach Anspruch 14 als Komponente einer optoelektronischen Vorrichtung, vorzugsweise einer Leuchtdiode, eines optischen Sensors oder einer Solarzelle; optisches Element; Lampenabdeckung, Lichtleiter, optische Linse, vorzugsweise für Raumbeleuchtungssysteme oder Kraftfahrzeug-Beleuchtungsanlagen, schwarz gefärbte Säulenverkleidung.

**Revendications**

**1.** Procédé pour la fabrication d'une composition de moulage comprenant un copolymère, le procédé comprenant les étapes suivantes :

(a) une étape de polymérisation, dans laquelle un mélange de monomères comprenant

de 80,0 à 99,9 % en poids, préférablement de 85,0 à 98,0 % en poids de méthacrylate de méthyle ; et
de 0,1 à 20,0 % en poids, préférablement de 2,0 à 8,0 % en poids de composé représenté par la formule (I)

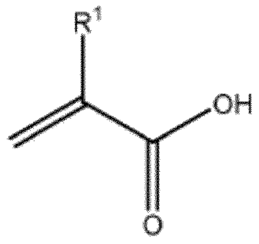

(I)

le substituant $R^1$ étant un atome d'hydrogène ou un groupe hydrocarboné possédant de 1 à 6 atomes de carbone,
éventuellement, de 0,0 à 19,9 % en poids, préférablement de 0,0 à 7,0 % en poids d'un monomère choisi parmi l'acrylate de méthyle, l'acrylate d'éthyle ou le styrène ;
un initiateur de polymérisation ; et éventuellement, un agent de transfert de chaînes
subit une copolymérisation radicalaire dans un réacteur de polymérisation pour former un mélange de copolymères comprenant le copolymère et des composants volatils ;

(b) éventuellement, une étape de chauffage du mélange de copolymères, obtenu dans l'étape de polymérisation (a) jusqu'à une température de 100 °C à 300 °C dans une unité de chauffage ; et
(c) une étape de dégazage d'élimination des composants volatils du mélange de copolymères pour former une masse fondue de copolymères dans une unité de dégazage, l'unité de dégazage comprenant

au moins un orifice d'entrée de mélange de copolymères,
au moins un dispositif de dégazage, le dispositif de dégazage comprenant
au moins une zone de dégazage au moins une sortie de gaz au moins une sortie de masse fondue de copolymères,

et au moins une matrice de sortie de masse fondue, une température de la masse fondue de copolymères *Tv,* °C dans la dernière zone de dégazage, en relation avec la direction d'acheminement de la masse fondue de copolymères, une température de la masse fondue de copolymères *To,* °C entrant dans la matrice de sortie de masse fondue et une durée de séjour totale *t*, s de la masse fondue de copolymères entre la dernière zone de dégazage, et la matrice de sortie de masse fondue de l'unité de dégazage étant ajustées de telle manière que le terme

$$4,981 \,.\, 10^{-8} \,.\, t.\, exp(0,0517 \,.\, (1,5 \,.\, Tv + 0,5 \,.\, To)/2)$$

soit inférieur à 8, préférablement inférieur à 6, encore plus préférablement inférieur à 4, particulièrement préférablement inférieur à 2.

**2.** Procédé selon la revendication 1, le terme (1,5 . *Tv* + 0,5 . *To*)/2), °C de la masse fondue de copolymères dans la dernière zone de dégazage du dispositif de dégazage dans l'étape de dégazage (c) étant compris entre 230 °C et 290 °C.

**3.** Procédé selon la revendication 1 ou 2, la durée de séjour totale *t*, s de la masse fondue de copolymères entre la dernière zone de dégazage, en relation avec la direction d'acheminement de la masse fondue de copolymères, et la matrice de sortie de masse fondue étant dans la plage de 10 s à 200 s.

**4.** Procédé selon l'une quelconque des revendications 1 à 3, l'unité de dégazage employée dans l'étape de dégazage (c) comprenant en outre au moins un filtre à masse fondue, situé entre la dernière zone de dégazage du dispositif de dégazage et la matrice de sortie de masse fondue.

**5.** Procédé selon l'une quelconque des revendications 1 à 4, une pression absolue dans la dernière zone de dégazage du dispositif de dégazage, en relation avec la direction d'acheminement de la masse fondue de copolymères, étant dans la plage de 100 Pa (1 mbar) à 30 000 Pa (300 mbars), préférablement dans la plage de 1 000 Pa (10 mbars) à 20 000 Pa (200 mbars).

**6.** Procédé selon l'une quelconque des revendications 1 à 5, le réacteur de polymérisation dans l'étape (a) étant un réacteur à cuve agitée exploité de manière discontinue ou de manière continue, un réacteur tubulaire exploité de manière continue, un réacteur en boucle exploité de manière discontinue ou de manière continue ou une combinaison de quelconques de ceux-ci, et si plusieurs réacteurs sont employés, ils sont exploités en parallèle ou sont reliés de manière séquentielle.

**7.** Procédé selon l'une quelconque des revendications 1 à 6, le dispositif de dégazage dans l'étape de dégazage (c) étant choisi parmi une extrudeuse à dégazage, un malaxeur à dégazage et une ou plusieurs chambres de vaporisation.

**8.** Procédé selon l'une quelconque des revendications 1 à 7, le copolymère comprenant

de 80,0 à 99,5 % en poids, préférablement de 85,0 à 98,0 % en poids de méthacrylate de méthyle ;
de 0,5 à 20,0 % en poids, préférablement de 2,0 à 8,0 % en poids de motifs répétitifs issus du composé représenté par la formule (I)

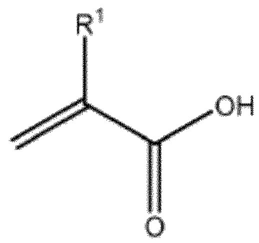

(I)

le substituant $R^1$ étant un atome d'hydrogène ou un groupe hydrocarboné possédant de 1 à 6 atomes de carbone, préférablement un groupe éthyle ; et, éventuellement
de 0,0 à 19,5 % en poids, préférablement de 0,0 à 7,0 % en poids de motifs répétitifs issus de l'acrylate de méthyle, de l'acrylate d'éthyle ou du styrène.

**9.** Composition de moulage pouvant être obtenue par le procédé selon l'une quelconque des revendications 1 à 8, la composition de moulage comprenant un copolymère, le copolymère comprenant

de 80,0 à 99,9 % en poids, préférablement de 85,0 à 98,0 % en poids de motifs répétitifs issus du méthacrylate de méthyle ; et
de 0,1 à 20,0 % en poids, préférablement de 2,0 à 8,0 % en poids de motifs répétitifs issus du composé représenté par la formule (I)

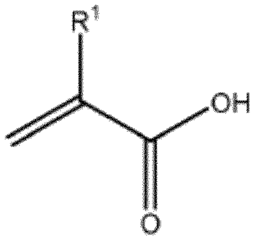

(I)

le substituant $R^1$ étant un atome d'hydrogène ou un groupe hydrocarboné possédant de 1 à 6 atomes de carbone, $R^1$ étant préférablement représenté par un groupe méthyle ;

éventuellement, de 0,0 à 19,9 % en poids, préférablement de 0,0 à 7,0 % en poids de motifs répétitifs issus de l'acrylate de méthyle, de l'acrylate d'éthyle ou du styrène ; et

pas plus de 1,5 % en poids, préférablement pas plus de 1,0 % en poids de motifs répétitifs représentés par la formule (II)

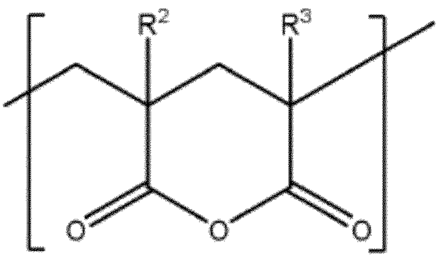

(II)

les substituants $R^2$ et $R^3$ étant indépendamment un atome d'hydrogène ou un groupe hydrocarboné possédant de 1 à 6 atomes de carbone, $R^2$ et $R^3$ étant préférablement représentés par un groupe méthyle.

**10.** Composition de moulage selon la revendication 9, la composition de moulage ne comprenant pas plus de 1 400 ppm, préférablement pas plus de 1 000 ppm de méthanol, et/ou pas plus de 1 800 ppm, préférablement pas plus de 1 500 ppm d'acide méthacrylique et/ou pas plus de 5 000 ppm, préférablement pas plus de 4 000 ppm de méthacrylate de méthyle.

**11.** Composition de moulage selon la revendication 9 ou 10, le copolymère possédant un poids moléculaire moyen en poids, déterminé par GPC, allant de 60 000 g/mole à 400 000 g/mole.

**12.** Composition de moulage selon l'une quelconque des revendications 9 à 11, le rapport du poids de motifs répétitifs représentés par la formule (II)

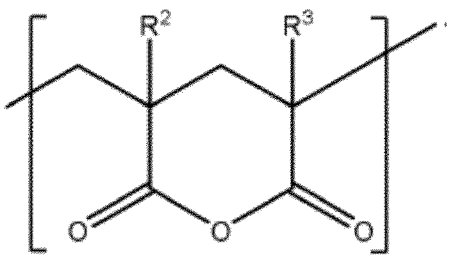

(II)

sur le poids de motifs répétitifs issus du composé représenté par la formule (I)

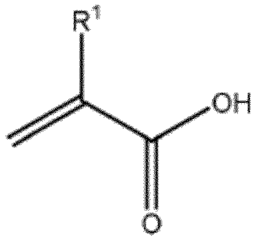

(I)

étant inférieur à 0,2, préférablement inférieur à 0, 1.

**13.** Composition de moulage selon l'une quelconque des revendications 9 à 12 comprenant en outre au moins un additif choisi parmi des absorbants UV, des stabilisants UV, des antioxydants, des matières colorantes, un agent d'amélioration de l'écoulement, des auxiliaires de diffusion, des lubrifiants, des stabilisants de couleur de traitement, des auxiliaires de démoulage ou une combinaison de quelconques de ceux-ci.

**14.** Article moulé pouvant être obtenu à partir d'une composition de moulage selon l'une quelconque des revendications 9 à 13 par un procédé choisi parmi un moulage par injection et une extrusion.

**15.** Utilisation d'un article moulé selon la revendication 14 en tant que composant d'un dispositif optoélectronique, préférablement une diode émettrice de lumière, un capteur optique ou une cellule solaire ; un élément optique ; une couverture de lampe, un guide de lumière, une lentille optique, préférablement pour des systèmes d'éclairage de pièces ou un équipement d'éclairage d'automobile, une garniture de pilier colorée en noir.

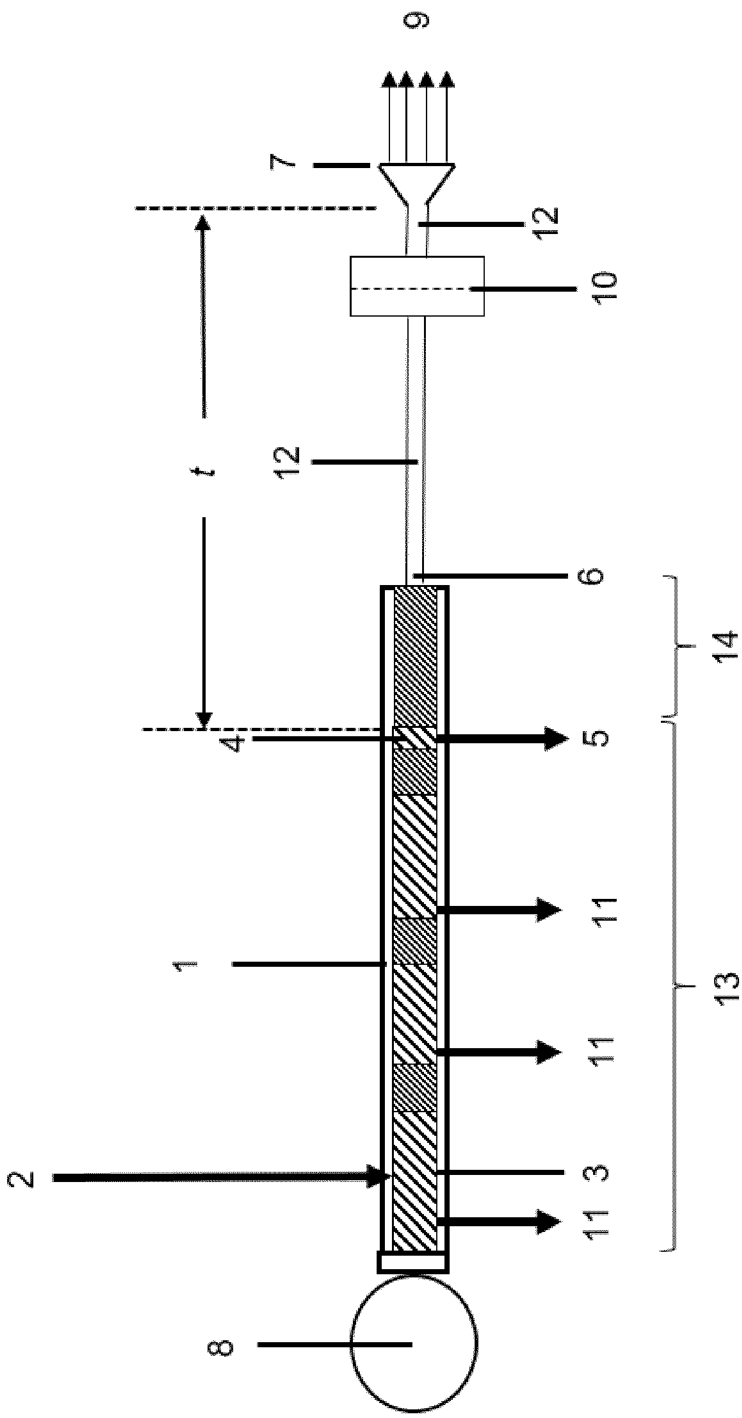


Figure 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 7888456 B2
- EP 3239191 A1
- WO 9733925 A1
- WO 2017097979 A1

### Non-patent literature cited in the description

- **H. F. MARK et al.** Encyclopaedia of Polymer Science and Engineering. J. Wiley, 1989, vol. 10, 1
- **HANS ZWEIFEL.** Plastics Additives Handbook. Hanser Verlag, 2001, 141